(19) Europäisches Patentamt
European Patent Office
Office européen des brevets

(11) **EP 4 604 445 B1**

(12) **EUROPEAN PATENT SPECIFICATION**

(45) Date of publication and mention
of the grant of the patent:
**29.04.2026 Bulletin 2026/18**

(21) Application number: **25157622.9**

(22) Date of filing: **13.02.2025**

(51) International Patent Classification (IPC):
*H04L 9/00* (2022.01)   *G06N 20/00* (2019.01)

(52) Cooperative Patent Classification (CPC):
**H04L 9/008; G06F 17/16; G06N 3/08; G06N 20/00**

(54) **METHOD FOR PROCESSING HOMOMORPHIC ENCRYPTION AND ELECTRONIC APPARATUS**

VERFAHREN ZUR VERARBEITUNG HOMOMORPHER VERSCHLÜSSELUNG UND
ELEKTRONISCHE VORRICHTUNG

PROCÉDÉ DE TRAITEMENT DE CHIFFREMENT HOMOMORPHE ET APPAREIL ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.02.2024 KR 20240020462
11.02.2025 KR 20250017325**

(43) Date of publication of application:
**20.08.2025 Bulletin 2025/34**

(73) Proprietor: **CRYPTO LAB INC.
Gwanak-gu, Seoul 08826 (KR)**

(72) Inventors:
• **Bae, Youngjin**
  **08787 Seoul (KR)**
• **Park, Jai Hyun**
  **69100 Villeurbanne, Lyon (FR)**

(74) Representative: **Dragotti & Associati S.P.A.
Via Nino Bixio, 7
20129 Milano (MI) (IT)**

(56) References cited:
**CN-A- 112 104 446      CN-A- 116 383 850
US-A1- 2021 111 864**

**Description**

TECHNICAL FIELD

The present disclosure relates to a method for processing a homomorphic ciphertext that may efficiently perform a high-dimensional matrix operation, and an electronic apparatus therefor.

BACKGROUND

As communication technology advances and electronic apparatuses become more widespread, continuous efforts are being made to ensure communication security between the electronic apparatuses. Accordingly, encryption and decryption technologies are used in most communication environments.

If a message encrypted by the encryption technology is transmitted to the other party, the other party is required to perform decryption to use the message. In this case, the other party may waste resources and time in a process of decrypting encrypted data. In addition, the message may be easily leaked to a third party if the third party hacks the message while the other party temporarily decrypts the message for operation.

To solve these problems, homomorphic encryption methods are being studied. Homomorphic encryption may acquire the same result as an encrypted value acquired after performing an operation on a plaintext, even if the operation is performed on a ciphertext itself acquired without decrypting encrypted information. Therefore, various operations may be performed without decrypting the ciphertext.

Recently, there have been efforts to utilize a homomorphic ciphertext in a large-scale language model (LLM) inference process, and the above-described inference process requires high-dimensional matrix multiplication. For example, Chinese patent application publication document CN 112104446 A1 discloses a multi-party joint machine learning method and system based on homomorphic encryption with improved privacy preservation.

Therefore, a method for efficiently performing a high-dimensional matrix operation using the homomorphic ciphertext is required.

SUMMARY

Embodiments of the present disclosure may address at least one of the problems and/or disadvantages described above and provide advantages described below. The present disclosure provides a method for processing a homomorphic ciphertext that may efficiently perform a high-dimensional matrix operation, and an electronic apparatus therefor.

The present disclosure provides a method for processing a homomorphic ciphertext in which information is not leaked between respective electronic apparatuses, even if the plurality of electronic apparatuses perform a specific operation together, and an electronic apparatus therefor.

Additional embodiments will be described in the detailed description provided below. Some will be apparent from the detailed description, while others will be derived through learning from the described embodiments.

According to an embodiment of the present disclosure, provided is an electronic apparatus. The apparatus includes: a memory for storing an instruction; and a processor configured to execute the instruction, wherein the processor is configured to generate a first matrix ciphertext by disposing a plurality of homomorphic ciphertexts in a matrix form if a matrix operation command for the plurality of homomorphic ciphertexts is input, split the first matrix ciphertext into a second matrix ciphertext and a third matrix ciphertext that satisfy predetermined conditions, and acquire a matrix operation result by performing a matrix operation between each of the second matrix ciphertext and the third matrix ciphertext and a plaintext matrix corresponding to the matrix operation command.

The processor may be configured to split the first matrix ciphertext to ensure that the first matrix ciphertext remains within an error range if the second matrix ciphertext is multiplied by a Toeplitz matrix and the third matrix ciphertext is added to its result.

Each homomorphic ciphertext may include an a-part and a b-part, and the processor may be configured to generate a second homomorphic ciphertext and a third homomorphic ciphertext to ensure that the a-parts remain identical, while only the b-parts differ.

The processor may be configured to convert a modulus of a first homomorphic ciphertext, linearly transform the first homomorphic ciphertext whose modulus is converted into a coefficient state, convert a ring degree of the linearly transformed first homomorphic ciphertext, and split a second homomorphic ciphertext whose ring degree is converted into the second homomorphic ciphertext and a third homomorphic ciphertext.

The processor may be configured to convert the ring degree of the homomorphic ciphertext corresponding to the operation result, and change the modulus of the homomorphic ciphertext whose ring degree is converted.

The processor may be configured to bootstrap the homomorphic ciphertext whose ring degree is converted to convert the modulus of the homomorphic ciphertext whose ring degree is converted.

The plurality of homomorphic ciphertexts may be acquired by splitting text and homomorphically encrypting the respective split texts, and the plaintext matrix may be a weight matrix included in a pre-trained model.

The plurality of homomorphic ciphertexts may be acquired by splitting the text into token units utilized by the pre-trained model.

According to an embodiment of the present disclosure, provided is a method for processing a ciphertext in an electronic apparatus, the method including: generating a first matrix ciphertext by disposing the plurality of homomorphic ciphertexts in a matrix form if a matrix operation command for the plurality of homomorphic ciphertexts is input; splitting the first matrix ciphertext into a second matrix ciphertext and a third matrix ciphertext that satisfy predetermined conditions; and acquiring a matrix operation result by performing a matrix operation between each of the second matrix ciphertext and the third matrix ciphertext and a plaintext matrix corresponding to the matrix operation command.

In the splitting, the first matrix ciphertext may be split to ensure that the first matrix ciphertext remains within an error range if the second matrix ciphertext is multiplied by a Toeplitz matrix and the third matrix ciphertext is added to its result.

Each homomorphic ciphertext may include an a-part and a b-part, and in the splitting, a second homomorphic ciphertext and a third homomorphic ciphertext are generated to ensure that the a-parts remain identical, while only the b-parts differ.

The method may further include: converting a modulus of a first homomorphic ciphertext; linearly transforming the first homomorphic ciphertext whose modulus is converted into a coefficient state; and converting a ring degree of the linearly transformed first homomorphic ciphertext.

The method may further include: converting the ring degree of the homomorphic ciphertext corresponding to the operation result; and changing the modulus of the homomorphic ciphertext whose ring degree is converted.

In the changing of the modulus, the homomorphic ciphertext whose ring degree is converted may be bootstrapped to convert the modulus of the homomorphic ciphertext whose ring degree is converted.

According to an embodiment of the present disclosure, provided is a computer-readable recording medium including a program for executing a method for processing a ciphertext, wherein the method includes generating a first matrix ciphertext by disposing the plurality of homomorphic ciphertexts in a matrix form if a matrix operation command for the plurality of homomorphic ciphertexts is input, splitting the first matrix ciphertext into a second matrix ciphertext and a third matrix ciphertext that satisfy predetermined conditions, and acquiring a matrix operation result by performing a matrix operation between each of the second matrix ciphertext and the third matrix ciphertext and a plaintext matrix corresponding to the matrix operation command.

## BRIEF DESCRIPTION OF THE DRAWINGS

The above or other aspects, features, or benefits of embodiments in the present disclosure will become more apparent from the following description with reference to the accompanying drawings, in which:

FIG. 1 is a diagram for describing a structure of a network system according to an embodiment of the present disclosure;

FIG. 2 is a block diagram showing a brief configuration of an electronic apparatus according to an embodiment of the present disclosure;

FIG. 3 is a block diagram showing a specific configuration of the electronic apparatus according to an embodiment of the present disclosure;

FIG. 4 is a diagram showing an example of a matrix operation according to an embodiment of the present disclosure;

FIG. 5 is a diagram showing an example of a matrix operation according to an embodiment of the present disclosure;

FIG. 6 is a diagram for describing a scalar multiplication method according to an embodiment of the present disclosure;

FIG. 7 is a diagram showing an example of a matrix operation according to an embodiment of the present disclosure;

FIG. 8 is a diagram showing an example of a matrix operation according to an embodiment of the present disclosure; and

FIG. 9 is a flowchart for describing a method for processing a ciphertext according to an embodiment of the present disclosure.

## DETAILED DESCRIPTION

Hereinafter, the present disclosure is described in detail with reference to the accompanying drawings. Encryption/decryption may be applied as necessary to a process of transmitting information (or data) that is performed in the present disclosure, and an expression describing the process of transmitting the information (or data) in the present disclosure and the claims should be interpreted as including all cases of the encryption/decryption even if not separately mentioned. In the present disclosure, an expression such as "transmission (transfer) from A to B" or "reception from A to B" may include transmission (transfer) or reception while having another medium included in the middle, and may not necessarily express only the direct transmission (transfer) or reception from A to B.

In describing the present disclosure, a sequence of each step should be understood as non-restrictive unless a preceding step in the sequence of each step needs to logically and temporally precede a subsequent step. That is, except for the above exceptional case, the essence of the present disclosure is not affected even if a process described as the subsequent step is performed before a process described as the preceding step, and the scope of the present disclosure should also be defined regardless of the sequences of the steps. In addition, in this specification, "A or B" may be defined to indicate not only selectively indicating either A or B, but also including both A and B. In addition, a term "including" in the present disclosure may encompass a concept of further including other components in addition to components listed as being included.

The present disclosure only describes essential components necessary for describing the present disclosure, and does not mention components unrelated to the essence of the present disclosure. In addition, it should not be interpreted as an exclusive concept that the present disclosure includes only the mentioned components, and should be interpreted as a non-exclusive concept that the present disclosure may include other components as well.

In addition, in the present disclosure, a "value" may be defined as a concept that includes a vector as well as a scalar value. In addition, in the present disclosure, an expression such as "calculate" or "compute" may be replaced with an expression that generates a result of the corresponding calculation or computation. In addition, unless otherwise indicated, an operation on a ciphertext described below refers to a homomorphic operation. For example, addition on homomorphic ciphertexts indicates homomorphic addition on two homomorphic ciphertexts.

Mathematical operations and calculations in each step of the present disclosure described below may be implemented as computer operations by a known coding method and/or coding designed to be suitable for the present disclosure to perform the corresponding operations or calculations.

Specific equations described below are illustratively provided among possible alternatives, and the scope of the present disclosure should not be construed as being limited to the equations mentioned in the present disclosure.

For convenience of description, the present disclosure defines the following notations:

$a \leftarrow D$: Select an element a based on distribution D.

$s1, s2 \in R$: Each of S1 and S2 is an element belonging to a set R.

$mod(q)$: Perform a modular operation with an element q.

$\lfloor * \rceil$ : Round an internal value.

Hereinafter, various embodiments of the present disclosure are described in detail with reference to the accompanying drawings.

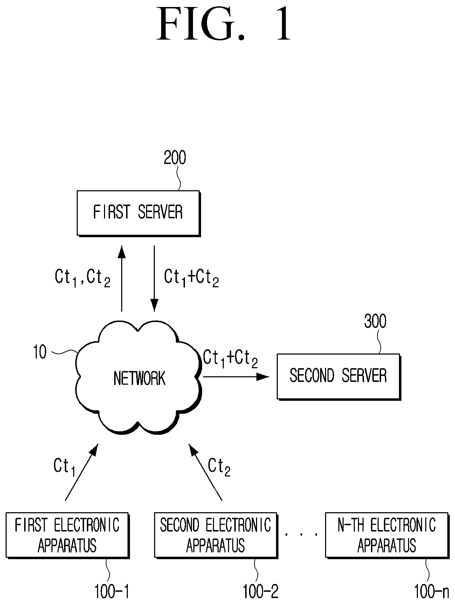

FIG. 1 is a diagram for describing a structure of a network system according to an embodiment of the present disclosure.

Referring to FIG. 1, the network system may include a plurality of electronic apparatuses 100-1 to 100-n, a first server 200 and a second server 300, and the respective components may be connected to one another via a network 10.

The network 10 may be implemented as any of various forms of wired/wireless communication networks, a broadcast communication network, an optical communication network, a cloud communication network or the like, and the respective devices may be connected to each other without a separate medium, such as wireless fidelity (Wi-Fi), Bluetooth, or near field communication (NFC).

FIG. 1 shows the plurality of electronic apparatuses. However, the plurality of electronic apparatuses are not necessarily required to be used, and a single apparatus may be used instead. As an example, the electronic apparatuses 100-1 to 100-n may be implemented in various forms of apparatuses such as smartphones, tablets, game players, personal computers (PCs), laptop PCs, home servers, or kiosks, and may also be implemented in the form of home appliances using internet of things (IoT) functions.

A user may input various information by using the electronic apparatuses 100-1 to 100-n that the user uses. The input information may be stored in the electronic apparatuses 100-1 to 100-n itself, or may also be transmitted to and stored in an external device for reasons such as storage capacity and security. As shown in FIG. 1, the first server 200 may serve to store such information, and the second server 300 may serve to utilize some or all of the information stored in the first server 200.

Each of the electronic apparatuses 100-1 to 100-n may homomorphically encrypt the input information and transmit a homomorphic ciphertext to the first server 200. Here, a homomorphic encryption target may be text or speech utilized in a language model. Such text or speech may be separated into token units utilized in the language model, and each separated unit may be homomorphically encrypted and provided to the first server 200.

Each of the electronic apparatuses 100-1 to 100-n may include an error, i.e., encryption noise calculated in a process of performing homomorphic encryption, in the ciphertext. In detail, the homomorphic ciphertext generated by each of the electronic apparatuses 100-1 to 100-n may be generated in a form in which a result value including a message and an error value is restored if the homomorphic ciphertext is decrypted later utilizing a secret key.

As an example, the homomorphic ciphertext generated by each of the electronic apparatuses 100-1 to 100-n may be generated in a form that satisfies a following property if decrypted utilizing the secret key.

[Equation 1]

$$Dec(ct, sk) = <ct, sk> = M + e(mod\ q)$$

Here, < and > indicate dot product operation (or usual inner product), ct indicates the ciphertext, sk indicates the secret key, M indicates a plaintext message, e indicates the encryption error value, and mod q indicates a modulus of the ciphertext. q needs to be selected to be larger than a result value M multiplied by a scaling factor $\Delta$ to the message. If an absolute value of the error value e is sufficiently smaller than M, a decrypted value M+e of the ciphertext may be a value that may replace an original message by the same precision in a significant figure operation. Among decrypted data, the error may be disposed on the least significant bit (LSB) side, and M may be disposed on the next least significant bit side.

If a size of the message is too small or too large, the size may be adjusted using the scaling factor. If the scaling factor is used, not only a message in an integer form but also a message in a real number form may be encrypted, and its usability may thus be greatly increased. In addition, the size of the message may be adjusted utilizing the scaling factor to thus also adjust a size of an effective region, that is, a region where the messages exist in the ciphertext after the operation is performed.

In some embodiments, the modulus q of the ciphertext may be set and used in various forms. As an example, the modulus of the ciphertext may be set in a form of an exponential power $q=\Delta^L$ of the scaling factor $\Delta$. If $\Delta$ is 2, the modulus may be set to a value such as $q=2^{10}$.

Meanwhile, the homomorphic ciphertext generated by the electronic apparatus 100 according to the present disclosure may be a ciphertext acquired using a learning with errors (LWE) scheme. In detail, this type of ciphertext is intended to save communication resources during a transmission process of the generated ciphertext, and in implementation, the ciphertext may be generated using a module learning with errors (MLWE) scheme or a ring learning with errors (RLWE) scheme instead of the LWE scheme. In addition, in the present disclosure, the homomorphic ciphertext may be generated using a method for generating only some components (information) included in the ciphertext instead of the general LWE or RLWE scheme.

The LWE scheme may be referred to as a single message homomorphic encryption scheme, single message homomorphic encryption, or the like. The RLWE scheme is a homomorphic encryption scheme that has a plurality of slots and may include the message in each slot, and may be referred to as multiple message homomorphic encryption, Cheon-Kim-Kim-Song (CKKS) homomorphic encryption, or the like. The MLWE scheme is a homomorphic encryption scheme that generalizes the LWE or RLWE scheme described above. In this respect, the LWE scheme may be viewed as an MLWE scheme having rank k and dimension 1. That is, $LWE^k = MLWE^k_1$. The RLWE scheme may be viewed as an MLWE scheme that has rank 1 and dimension N. That is, $RLWE_N = MLWE^1_N$.

Hereinafter, for the sake of ease of description, the homomorphic ciphertext using a first scheme (LWE) is referred to as an LWM ciphertext, the homomorphic ciphertext using a second scheme (RLWE) is referred to as an RLWM ciphertext, and the homomorphic ciphertext using a third scheme (MLWE) is referred to as an MLWE ciphertext.

In this way, the MLWE ciphertext may be viewed as a ciphertext generated using the encryption scheme that generalizes LWE or RLWE, and the above-described schemes may be converted through a conversion process.

The first server 200 may store the received homomorphic ciphertext in a ciphertext state without decrypting the ciphertext. Meanwhile, the first server 200 may store not only the homomorphic ciphertext encrypted using a single scheme, but also the homomorphic ciphertext encrypted using various schemes.

In this case, the first server 200 may perform a conversion operation on the homomorphic ciphertext encrypted using different schemes, or perform a process of merging the plurality of homomorphic ciphertexts into a single ciphertext.

The second server 300 may request a specific processing result for the homomorphic ciphertext from the first server 200. For example, the second server 300 may request a matrix operation on the plurality of homomorphic ciphertexts. This matrix operation may be an inference process that utilizes a pre-trained learning model. Accordingly, the second server 300 may provide a weight matrix that is included the corresponding learning model to the first server 200.

The first server 200 may perform the specific operation based on the request from the second server 300 and then transmit its result to the second server 300.

As an example, if ciphertexts ct1 and ct2 transmitted from two electronic apparatuses 100-1 and 100-2 are stored in the first server 200, the second server 300 may request the first server 200 for a value acquired by combining information provided by the two electronic apparatuses 100-1 and 100-2. The first server 200 may perform an operation for combining the two ciphertexts based on the request and then transmit a result value ct1 + ct2 to the second server 300.

Due to a property of the homomorphic ciphertext, the first server 200 may perform the operation without decrypting the ciphertext, and the result value may also be generated in a ciphertext form. In the present disclosure, the result value acquired using the operation is referred to as an operation result ciphertext.

The first server 200 may transmit the operation result ciphertext to the second server 300. The second server 300 may decrypt the received operation result ciphertext to thus acquire an operation result value of data included in each homomorphic ciphertext.

The first server 200 may perform the operation multiple times based on a user request. In this case, an approximate message weight in the operation result ciphertext acquired for each operation may be changed. The first server 200 may perform a bootstrapping operation if the approximate message weight exceeds a threshold. In this way, the first server 200 may perform the operation process and, and may thus also be referred to as an operation device.

In detail, in Equation 1 above, if q is smaller than M, M + e(mod q) has a different value from M+e, thus making the decryption impossible. Therefore, a value of q needs to always be maintained to be greater than M. However, the value of q may be gradually decreased as the operation progresses. Therefore, an operation is required to change the value of q to ensure that the value of q always remains greater than M, and this operation is referred to as the bootstrapping operation. As the bootstrapping operation is performed, the ciphertext may be made available for the operation again.

Meanwhile, FIG. 1 shows a case where the encryption is performed by the first electronic apparatus and the second electronic apparatus, and the second server performs the decryption, and the present disclosure is not necessarily limited thereto. In addition, although the matrix operation is described above as being utilized in the inference process of the language model, this operation is only an example and may be applied to various processes that require the matrix operation between the plaintext and the ciphertext, as well as another inference process.

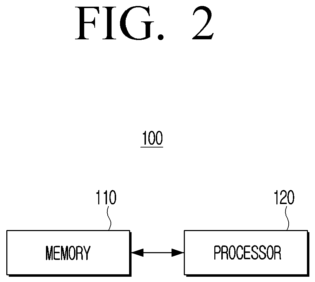

FIG. 2 is a block diagram showing a brief configuration of the electronic apparatus according to an embodiment of the present disclosure.

Referring to FIG. 2, the electronic apparatus 100 may include a memory 110 and a processor 120.

The memory 110 is a component for storing an operating system (O/S) for driving the electronic apparatus 100 or various instructions and/or software, data, or the like related to the generation and operation processing of the homomorphic ciphertext described below. The memory 110 may be implemented in any of various forms such as a random-access memory (RAM), a read-only memory (ROM), a flash memory, a hard disk drive (HDD), an external memory, or a memory card, and is not limited to any one thereof.

The memory 110 may store the message to be encrypted. Here, the message may include various credit information, personal information, or the like quoted by the user, and may also be information related to a usage history, such as location information or internet usage time information used by the electronic apparatus 100. Alternatively, the message may be text generated from speech spoken by the user or text generated via text-to-speech (TTS) from the speech described above.

In addition, the memory 110 may store a public key, and if the electronic apparatus 100 is an apparatus that directly generates the public key, the electronic apparatus 100 may store not only the secret key, but also various parameters necessary for generating the public key and the secret key.

In addition, the memory 110 may store the homomorphic ciphertext generated in a process described below (e.g., merged homomorphic ciphertext or homomorphic ciphertext generated using the homomorphic operation). Here, the ciphertext stored in the memory 110 may be a ciphertext generated using the RLWE scheme.

In addition, the memory 110 may store plaintext matrix data to be utilized in the ciphertext operation described below. This matrix data may be the weight matrix included in the language model described above. In addition, the memory 110 may store various data (e.g., second matrix ciphertext or third matrix ciphertext) temporarily generated in the process described below.

The processor 120 may control each component included in the electronic apparatus 100. The processor 120 may be configured as a single device, such as a central processing unit (CPU) or an application-specific integrated circuit (ASIC), or may be configured as a plurality of devices, such as central processing units (CPUs) and graphics processing units (GPUs).

The processor 120 may store the message to be transmitted in the memory 110 if the corresponding message is received. The processor 120 may homomorphically encrypt the message by utilizing various set values and programs stored in the memory 110. In this case, the public key may be used.

The processor 120 may generate and use the public key required to perform the encryption on its own, or may receive the public key from the external device and use the same. As an example, the second server 300 performing the decryption may distribute the public key to other devices.

If the processor 120 generates the key on its own, the processor 120 may generate the public key by utilizing the Ring-LWE scheme. To describe in detail, the processor 120 may first set the various parameters and rings and store the same in the memory 110. An example of the parameter may include a length of plaintext message bits, dimension n, rank k, a size of the public key or the secret key, or the like. The homomorphic ciphertext may have various formats, and the processor 120 may set the ring based on a ciphertext scheme according to a scheme set by the user or a predetermined scheme. For example, the homomorphic ciphertext scheme described above may be the CKKS scheme or the RLWE scheme.

The ring may be expressed by the following equation.

[Equation 2]

$$R = Z_q[X]/f(x)$$

Here, R indicates the ring, $Z_q$ indicates a coefficient, and f(x) indicates an N-th polynomial.

The Ring indicates a set of polynomials having predetermined coefficients, and indicates the set in which addition and multiplication are defined between elements and which is closed under the addition and multiplication. The Ring may be referred to as the ring.

As an example, the ring indicates a set of the N-th polynomials having the coefficient $Z_q$. In detail, if n is $\Phi(N)$, N indicates a polynomial which may be calculated as the remainder of dividing the polynomial by an N-th cyclotomic polynomial. (f(x)) indicates ideal of $Z_q[x]$ generated by f(x). The Euler totient function $\Phi(N)$ indicates the number of natural numbers that are coprime to N and smaller than N.

The ring used in the above-described MLWE may be expressed by Equation 3 below.

[Equation 3]

$$R_{q,N} = Z_q[X_{(N)}]/(X_{(N)}^N + 1)$$

Here, q indicates a modulus, k indicates a rank, and N indicates a dimension. Meanwhile, the above-described ring assumes MLWE, and in case of using LWE, N may be replaced with 1 and used, and in the RLWE scheme, k may be replaced with 1 and used.

If the ring is set, the processor 120 may calculate a secret key sk from the ring.

[Equation 4]

$$sk \leftarrow (1, s(x)), s(x) \in R$$

Here, s(x) indicates a random polynomial generated using a small coefficient.

If the ring and the secret key are selected, the processor 120 may calculate a first random polynomial (a(x)) from the ring. The first random polynomial may be expressed as follows.

[Equation 5]

$$a(x) \leftarrow R$$

In addition, the processor 120 may calculate the error. In detail, the processor 120 may extract the error from a discrete Gaussian distribution or a distribution having a statistical distance close thereto. This error may be expressed as follows.

[Equation 6]

$$e(x) \leftarrow D_{\alpha q}^n$$

If even the error is calculated, the processor 120 may calculate a second random polynomial by performing a modular operation on the error in the first random polynomial and the secret key. The second random polynomial may be expressed as follows.

[Equation 7]

$$b(x) = -a(x)s(x) + e(x)(\bmod q)$$

Finally, a public key pk may be set to include the first random polynomial and the second random polynomial as follows.

[Equation 8]

$$pk = (b(x), a(x))$$

Meanwhile, each content of Equations 4 to 8 described above may be an example of a case of using the CKKS scheme (i.e., RLWE scheme), and the above-described scheme may be modified to suit a corresponding scheme and used in case of using the LWE or MLWE scheme. In addition, the public key and the secret key may be generated using a scheme other than the scheme described above.

In addition, the processor 120 may generate the homomorphic ciphertext for the message. In detail, the processor 120 may generate the homomorphic ciphertext by applying a previously generated public key to the message.

The processor 120 may process the message before generating the homomorphic ciphertext described above. For example, if speech data is received, the processor 120 may process the received speech data to convert the same into the text. In addition, the processor 120 may separate the acquired text into a predetermined number of words (or sentences) (processing units or tokens), and individually homomorphically encrypt context (or meaning) of each separated token unit.

This operation may also be referred to as packing because the corresponding operation combines a plurality of messages (or ciphertexts) into a single ciphertext.

If the plurality of homomorphic ciphertexts are generated, the processor 120 may utilize the plurality of homomorphic ciphertexts described above and dispose the same in a matrix form to thus generate a matrix ciphertext. The matrix ciphertext may be pre-generated before the data is transmitted to the external device, or a conversion operation into the matrix data may be performed if the matrix operation or the like is input from an external source.

If the homomorphic ciphertext is generated, the processor 120 may store the same in the memory 110 or control a communication device 130 to transmit the homomorphic ciphertext to another device based on the user request or a predetermined default command.

The processor 120 may convert the homomorphic ciphertext. For example, if there are various forms of homomorphic ciphertexts, the operations are unable to be performed together because the ciphertexts have different dimensions or different ranks.

Therefore, the processor 120 may convert the input homomorphic ciphertext or the homomorphic ciphertext to be processed for operation into an RLWE ciphertext having dimension N, an RLWE ciphertext having rank K, or an RLWE ciphertext having dimension N and rank K to handle all dimensions and all ranks, and perform the processing for operation by using the converted ciphertext.

In addition, the processor 120 may merge the plurality of homomorphic ciphertexts. Here, the processor 120 may merge the homomorphic ciphertexts by using various schemes, and if the corresponding ciphertext is generated using the RLWE scheme, the processor 120 may merge the homomorphic ciphertexts by using a packing scheme.

If the plurality of homomorphic ciphertexts are the LWE ciphertexts, the processor 120 may perform the merging by viewing each of a plurality of first homomorphic ciphertexts as a homomorphic ciphertext having rank k and dimension 1, converting the first homomorphic ciphertext into a third homomorphic ciphertext having a plurality of dimensions, and converting the third homomorphic ciphertext into a second homomorphic ciphertext having rank 1 and dimension N.

The conversion process may be performed using two schemes: the first one uses an intermediate ciphertext (generated using the MLWE scheme), and the second one merges the ciphertexts into an RLWE ciphertext having a low dimension through ring packing and ring switching, and then merges the ciphertext into an RLWE ciphertext having a high dimension.

In addition, the processor 120 may perform the matrix operation on the ciphertext. For example, if a request is received to perform the inference process by utilizing the pre-trained model for the homomorphic ciphertext, the processor 120 may perform the matrix operation on the homomorphic ciphertext described above and the weight matrix within the learning model described above. This operation may be referred to as a plaintext-ciphertext matrix operation (or plaintext-ciphertext homomorphic matrix multiplication).

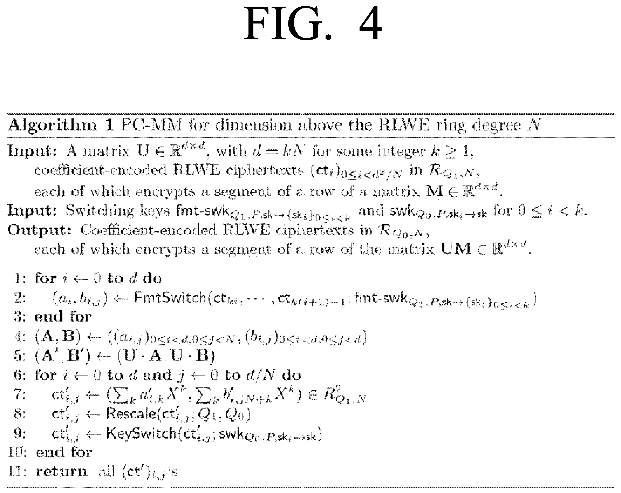

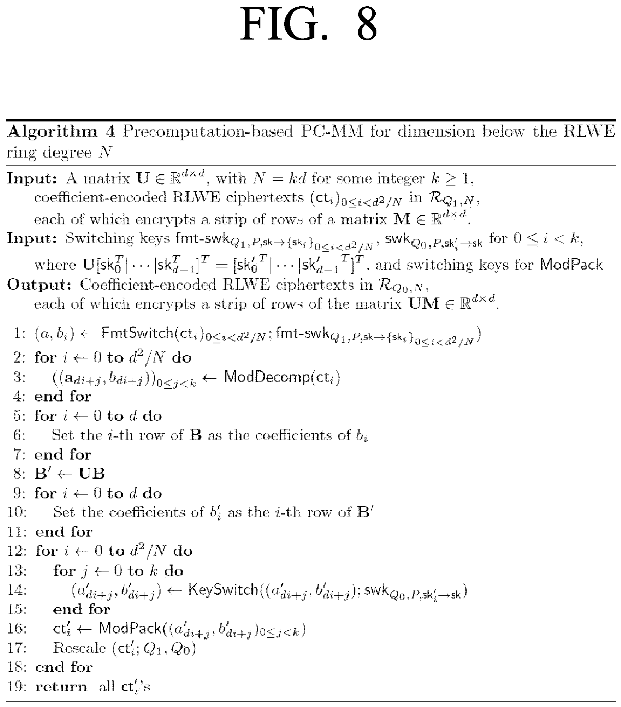

Here, plaintext-ciphertext homomorphic matrix multiplication (hereinafter, PC-MM) is an operation that returns a ciphertext corresponding to matrix $U \cdot M$ from matrix $U = (u_{i,j})_{0 \leq i \leq d1, 0 \leq j \leq d2}$ (plaintext) and matrix $M = (m_{i,j})_{0 \leq i \leq d2, 0 \leq j \leq d3}$ (ciphertext). More detailed operations for plaintext-ciphertext homomorphic matrix multiplication may be described below with reference to FIGS. 4 to 8.

Meanwhile, if the operation is completed, the processor 120 may detect data in the effective region from operation result data. In detail, the processor 120 may perform rounding processing on the operation result data to detect the data in the effective region. The rounding processing indicates rounding off of the message while the message is encrypted, and may also be referred to as rescaling.

In detail, the processor 120 may remove a noise region by multiplying each component of the ciphertext by $\Delta^{-1}$, which is an inverse of the scaling factor, and rounding off the same. The noise region may be determined to correspond to the size of the scaling factor. As a result, the message in the effective region excluding the noise region may be detected. The rounding processing may be performed while the message is encrypted, an additional error may thus occur. However, a size of the error may be sufficiently small and thus ignored.

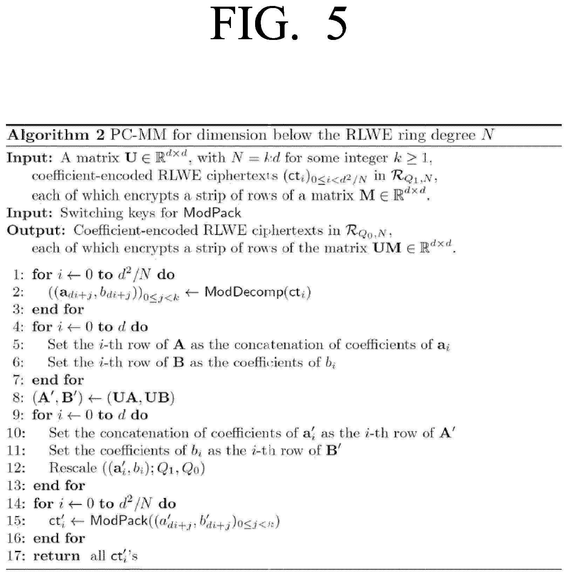

In addition, the processor 120 may perform an operation to recombine the merged homomorphic ciphertexts if the homomorphic operation on the merged homomorphic ciphertext is input. This operation is described below with reference with FIG. 5.

In addition, the processor 120 may perform key switching for the homomorphic ciphertext. Here, the key switching assumes a case of the RLWE ciphertext, and RLWE key switching may include sub-steps such as modulus expansion (ModUp), modulus reduction (ModDown), and multiplication switching (MultSwk). The key switching may be performed using gadget decomposition and an intermediate integer.

ModUp: $R_{g,N} \rightarrow R_{gp,N}$, which is an operation that embeds polynomial input belonging to $R_{g,N}$ into $R_N$.

MultSwk: $R_{qp,N} \times R_{qp,N}^2 \rightarrow R_{qp,N}^2$, which is an operation that receives a polynomial and a switching key, and performs a Hadamard product at each degree N.

ModDown: $R_{qp,N}^2 \rightarrow R_{q,N}^2$, which is an operation that receives the ciphertext and calculates an approximate value of p.

In addition, if the homomorphic ciphertext is required to be decrypted, the processor 120 may apply the secret key to the homomorphic ciphertext to thus generate a polynomial-shaped decrypted text, and decode the polynomial-shaped decrypted text to thus generate the message. The message generated here may include the error as mentioned in Equation 1 described above.

In addition, the processor 120 may perform the homomorphic operation (or general arithmetic operation) on the homomorphic ciphertext. In detail, the processor 120 may perform the operation such as addition or multiplication on the homomorphic ciphertext while maintaining its encrypted state. In detail, the processor 120 may process each of the homomorphic ciphertexts to be used in the operation by using a first function, perform the operation such as the addition or multiplication between the homomorphic ciphertexts processed using the first function, and process the homomorphic ciphertexts, on which the operation is performed, by using a second function, which is the inverse function of the first function. These first-function processing and second-function processing may utilize a linear transformation technique in a bootstrapping process described below.

In addition, the processor 120 may perform the bootstrapping operation on the ciphertext if the approximate message weight in the operation result ciphertext exceeds the threshold. In detail, the processor 120 may generate the homomorphic ciphertext whose plaintext space is expanded by expanding a modulus of the operation result ciphertext, performing a first linear transformation on the homomorphic ciphertext whose modulus is expanded into a polynomial form, performing an approximate arithmetic on the first homomorphic ciphertext, which is converted into the polynomial form, by using a function set to approximate a modulated range of the plaintext, performing a second linear transformation on the second homomorphic ciphertext, on which the approximate arithmetic is performed, into a form of the homomorphic ciphertext, and performing a subtraction operation by subtracting the second homomorphic ciphertext, on which the second linear transformation is performed, from the homomorphic ciphertext whose modulus is expanded.

As described above, the electronic apparatus 100 according to an embodiment of the present disclosure may support the matrix operation between the plaintext and ciphertext in a more efficient way, thereby performing the matrix operation more quickly and efficiently.

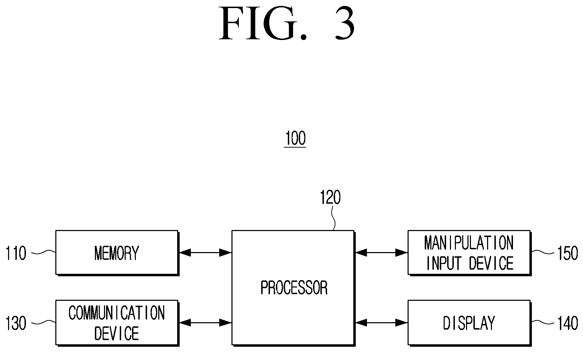

Meanwhile, only the brief components included in the electronic apparatus 100 are shown and described hereinabove. However, in implementation, the electronic apparatus 100 may include various additional components. A description of this configuration is provided below with reference to FIG. 3.

FIG. 3 is a block diagram showing a specific configuration of the electronic apparatus according to an embodiment of the present disclosure.

Referring to FIG. 3, the electronic apparatus 100 according to the present disclosure may include the memory 110, the processor 120, the communication device 130, a display 140, and a manipulation input device 150.

The description describes the memory 110 with reference to FIG. 2, and thus omits its redundant description. In addition, the description also describes the processor 120 with reference to FIG. 2, and thus omits its contents provided with reference to FIG. 2, and only describes its additional functions in FIG. 3.

The communication device 130 may connect the electronic apparatus 100 to the external device (not shown), and may be connected to the external device not only via a local area network (LAN) or the internet, but also via a universal serial bus (USB) port or a wireless communication port (e.g., Wi-Fi 802.11a/b/g/n, NFC, or Bluetooth). The communication device 130 may also be referred to as a transceiver.

The communication device 130 may receive the public key from the external device, and transmit the public key generated by the electronic apparatus 100 to the external device.

In addition, the communication device 130 may receive the message from the external device, and transmit the generated homomorphic ciphertext to the external device. On the other hand, the communication device 130 may also receive the ciphertext from the external device.

In addition, the communication device 130 may receive various parameters required for generating the ciphertext from the external device. Meanwhile, in implementation, the various parameters may be directly input from the user through the manipulation input device 150 described below.

In addition, the communication device 130 may receive the pre-trained model or the weight matrix included in the above-described model from the external source.

The display 140 may display a user interface window for selection of functions supported by the electronic apparatus 100. In detail, the display 140 may display the user interface window for the selection of various functions provided by the electronic apparatus 100. The display 140 may be a monitor such as a liquid crystal display (LCD), a cathode ray tube (CRT), or an organic light-emitting diode (OLED), and may also be implemented as a touchscreen capable of simultaneously performing a function of the manipulation input device 150 described below.

The display 140 may display a message requesting input of the parameter required for generating the secret key or the public key. In addition, the display 140 may display a message for selecting a message as the encryption target. Meanwhile, in implementation, the encryption target may be selected directly by the user or automatically selected. That is, the personal information requiring the encryption may be set automatically even if the user does not directly select the message.

The manipulation input device 150 may receive a function selection command and a control command for a corresponding function of the electronic apparatus 100 from the user. In detail, the manipulation input device 150 may receive the parameter required for generating the secret key or the public key from the user. In addition, the manipulation input device 150 may receive the message to be encrypted from the user.

In addition, the manipulation input device 150 may select a learning model to be applied to the plurality of homomorphic ciphertexts. Based on such a selection command, the processor 120 may perform the matrix operation on the plurality of homomorphic ciphertexts and the weight matrix included in the selected learning model.

In addition, the manipulation input device 150 may also receive a homomorphic ciphertext transmission command, a homomorphic operation command, or the like.

If the processor 120 receives the parameters required for generating the secret key or the public key from the user, the processor 120 may generate a setting parameter based on the received parameter, and generate the secret key or the public key based on the generated setting parameter.

In addition, if it is necessary to generate the ciphertext for the message, the processor 120 may generate the homomorphic ciphertext by applying the public key to the message. In detail, the processor 120 may generate the homomorphic ciphertext by converting the message into the polynomial form and applying the public key to the message in the polynomial form.

In addition, if the homomorphic ciphertext is required to be decrypted, the processor 120 may apply the secret key to the homomorphic ciphertext to thus generate the polynomial-shaped decrypted text, and decode the polynomial-shaped decrypted text to thus generate the message. The message generated here may include the error as mentioned in Equation 1 described above.

In addition, if it is necessary to perform the operation on the homomorphic ciphertext, the processor 120 may perform the addition or multiplication operation on the plurality of homomorphic ciphertexts requested by the user.

As described above, the electronic apparatus 100 according to this embodiment may generate the homomorphic ciphertext for the message, thus improving stability of the message even if the operation is required. In addition, the generated homomorphic ciphertext may include the error, thus maintaining stable security for biometric information or the like that requires high security.

Hereinafter, the description describes a detailed operation of the plaintext-ciphertext homomorphic matrix multiplication (hereinafter, PC-MM). In the following, it is assumed that the plaintext may be expressed as the matrix such as $U=(u_{i,j})_{0\leq i<d1,0\leq j<d2}$, and the ciphertext may also be expressed as $M=(m_{i,j})_{0\leq i<d2,0\leq j<d3}$.

The following operation may handle an approximate computation in R, and these techniques may also be applied to another ring (e.g., $Z_p$) for integer p.

PC-MM may serve an important function in machine learning that protects the personal information, especially in an inference step of the large-scale language model (LLM) such as generative pre-trained converter (GPT), bidirectional encoder representations from converters (BERT), or large language model meta AI (LLaMA). In addition, PC-MM may be utilized to evaluate privacy of these models through secure multiparty computation (MPC) or fully homomorphic encryption (FHE).

High-dimensional matrix multiplication may be utilized at various steps in the inference process of the large-scale language model (LLM). For example, the large-scale language model may process a user input by dividing the same into the tokens (basic units of language).

In addition, the processing power of the large-scale language model may be related to a context size ($n_{tok}$), that is, the maximum number of tokens available for processing simultaneously. That is, the selection of $n_{tok}$ may determine a size of the matrix multiplication that needs to be performed, which may also affect a computational cost. In general, the large-scale language model may use two dimensions (dim and $d_{ff}$), and $d_{ff}$ may be 2 to 4 times larger than dim. The large-scale language model may utilize the following three types of matrix multiplication.

First attention process: Multiplication of weight matrix $U \in R^{dim \times dim}$ and user data matrix $M \in R^{dim \times ntok}$.

Second feed-forward process: Process of multiplying and activating large weight matrix $U \in R^{dff \times dim}$ and processed user data $M \in R^{dim \times ntok}$.

Third dimension reduction process: Multiplication of current user data matrix $R^{dff \times dim}$ and $R^{dim \times dff}$ to reduce the dimension to dim again.

In the inference of the large-scale language model that protects the privacy, the weight matrices may be provided in the plaintext, and the user data matrix may be encrypted.

For example, in the large-scale language model, $n_{tok}$ may range from 128 to 16,384 (for example, GPT-3.5) or more, and dim may vary from 4,096 (for example, LLaMA-7B) to 18,432 (for example, PaLM 540B).

Previous studies do not consider a large matrix dimension. For example, the previous studies show that it takes about 23 seconds to perform the matrix multiplication on a plaintext matrix having a size of 3,072×768 and a ciphertext having a size of 768×128. On the other hand, the present disclosure may perform the same matrix multiplication operation in less than 5 μs in the same environment.

Meanwhile, a PC-MM algorithm implemented in the present disclosure may be based on a fully homomorphic encryption (FHE) scheme relying on a ring learning with errors (RLWE) problem, such as Brakerski-Gentry-Vaikuntanathan (BGV), Brakerski-Fan-Vercauteren (BFV), or CKKS. This scheme may have asymptotic execution times that are linear in the product of the dimensions (or shorter for large dimensions by using a recursive blocking technique).

Meanwhile, performance limitations may be caused by the use of a large RLWE modulus in the present disclosure, and more precisely, by moving the data through RLWE coefficients or slots within the RLWE ciphertext (i.e., coefficients of the Fourier conversion).

The present disclosure may modify a scheme designed for ciphertext-ciphertext matrix multiplication and apply the same to PC-MM. In applying this process, for more efficient operation, (1) all operations are replaced with partially homomorphic operations, and (2) single instruction, multiple data (SIMD) characteristics of the efficient FHE scheme are reflected.

Applying such an operation may benefit from highly optimized linear algebra libraries (e.g., open basic linear algebra subprograms (OpenBLAS)) and optimize the FHE bootstrapping process, thus Accelerating PC-MM performance.

First, a main operation in the present disclosure is to separate the single ciphertext. Hereinafter, it is assumed that the matrix is square and the dimension is d. In addition, $q^2$ and N are powers of 2, and $R_{N,q} = Z_q[x]/(X^N+1)$ is defined as a ring learning with errors (RLWE) ring.

First, Lempel-Ziv (LZ) algorithm is described. In this algorithm, assume d=N, and matrix M is provided with d RLWE ciphertexts ($b_i$, $a_i$), each of which may encrypt a row of the matrix. In this case, the ciphertext may satisfy Formula 9 below.

[Formula 9]

$$\forall i : a_i s + b_i \approx \sum_j m_{i,j} X^j$$

Here, $s \in R_{N,q}$ is the secret key. If rewritten in the matrix form, the above equation may be expressed by Formula 10 below.

[Formula 10]

$$A \cdot Rot(s) + B \approx M \bmod q$$

Here, an i-th row of A may consist of a coefficient of $a_i$, and B and Rot(s) may also consist of coefficients of $b_i$ and Xi $s \in R_{N,q}$, respectively. In addition, Rot(s) is a Toeplitz matrix, while A and B have no special structure.

Multiplying both sides of Equation 10 by plaintext matrix $U \in R^{d \times d}$ gives Formula 11 below.

[Formula 11]

$$(U \cdot A) \cdot Rot(s) + (U \cdot B) \approx U \cdot M \bmod q$$

Here, an error term represented by "≈" is also multiplied by U, and this point therefore needs to be taken into account in case of setting the parameters. Equation 11 follows the same form as Equation 10 after multiplying both sides by U, and U·A and U·B may thus be defined as follows. $a'_i$ and $b'_i$ may correspond to an i-th row of each of U•A and U•B. As a result, $(b'_i, a'_i)$ is the RLWE ciphertext acquired by encrypting U•M. In general, plaintext-ciphertext matrix multiplication (PC-MM) of U and M may be simplified to plaintext-plaintext matrix multiplication (PP-MM) of U and A, and U and B.

This approach may be generalized to a case where d = kN (here, k is an integer). Each row is encrypted using multiple RLWE ciphertexts (a total of $d^2/N$), which may be expanded as shown in Formula 12.

[Formula 12]

$$A \cdot (I \otimes Rot(s)) + B \approx M \bmod q$$

If the left side of the above equation is multiplied by U, the PC-MM algorithm may consist of two PP-MMs for q.

Meanwhile, large parameters (e.g., ring degree and modulus) used in an RLWE-based fully homomorphic encryption (FHE) scheme may cause computational overhead and limit the granularity compared to explicit computation.

To address this issue, the present disclosure uses a level management scheme. This level management scheme may be applied in advance before performing an actual operation process between the plaintext matrix and a ciphertext matrix, which is described below.

For example, computation may be performed on the ciphertext in coefficient encoding at the lowest modulus and the smallest ring degree, and ring switching and half bootstrap (HalfBTS) scheme may then be used to thus recover the parameters. Performing this process may improve the efficiency of PC-MM and provide flexibility in selecting a size of the matrix.

It is assumed that a slot-encoded ciphertext initially has modulus=Q and degree=$N_{FHE}$.

That is, a level of Q may be reduced by 3 to 4 levels by applying modulus switching to the initial ciphertext. This operation may provide a basis for computation at a smaller modulus.

The ciphertext may be converted into a coefficient-encoded state by performing a slot-to-coefficient conversion (Slots-to-Coeffs, S2C). Performing this conversion enables the ciphertext to have a modulus suitable for single constant multiplication.

In addition, the ring degree may be reduced to $N_{LWE}$ by the ring switching. This operation is an important step in performing efficient plaintext-plaintext matrix multiplication (P-P MM).

After this process is performed, the ciphertext may be split into two ciphertexts, and modulus reduction and scaling may be performed on the corresponding ciphertexts, thereby performing the matrix operation.

In addition, after the matrix operation is performed, the ring degree may be recovered and halfBTS may be performed, thereby recovering the modulus. By performing this process, the slot-encoded ciphertext may be recovered using a high modulus and degree=$N_{FHE}$.

In this way, if the matrix operation is performed at a low modulus, the computational cost may increase in proportion to the bit length, thereby improving the efficiency at the low modulus. That is, the efficiency of the matrix operation may be improved.

Hereinafter, the description describes a form (or format) of sharing a specific part between the homomorphic ciphertexts.

Hereinafter, the description describes multiple-secret-key RLWE (multiple-secret RLWE), especially a method of using a shared a-part. Hereinafter, the description basically assumes that the ring degree is N, and uses R or $R_Q$ as ring notation.

The RLWE ciphertext may consist of the following pair $(a, b) \in R_Q^2$ for the secret key $sk \in R$ and the plaintext $m \in R$. Here, each ciphertext may be expressed as in Formula 13 below.

[Formula 13]

$$a \cdot sk + b \approx m \bmod Q.$$

Here, a is referred to as the a-part, and b is referred to as a b-part.

In this way, the RLWE ciphertext uses two elements of $R_Q$ to represent a single ring element m, which may also affect computational performance.

If the several ciphertexts share the common a-part, the representation efficiency may be improved. This configuration may indicate that only k+1 $R_Q$ elements are needed to store k plaintexts.

It is assumed that k RLWE ciphertexts $ct_i = (a_i, b_i) \in R_Q^2$ satisfy following Equation 14 for the same secret key sk $\in$ R and the same plaintext $m_i \in$ R.

[Formula 14]

$$\forall i, 0 \leq i < k : a_i \cdot sk + b_i \approx m_i$$

A format that uses the shared a-part may utilize the following new expressions.

[Formula 15]

$$\forall i, 0 \leq i < k : a \cdot sk_i + b_i \approx m_i$$

Here, a is the a-part shared by all the ciphertexts, and $sk_0$, $sk_1$, ..., and $sk_{k-1}$ are different secret keys. In this case, only k+1 $R_Q$ elements are needed to store k plaintexts.

Hereinafter, the description describes an operation process utilizing the ciphertext that shares the a-part expressed in the scheme described above.

Sh-Add: Addition between ciphertexts sharing a-part.

Given ciphertext $(a, b_1)$ and $(a, b_2)$, sh-add$((a, b_1), (a, b_2)) = (a, b_1+b_2)$.

Sh-PCMult: Multiplication between ciphertext$(a, b1)$ and plaintext$(m_2 \in R)$ that share a-part is Sh-PCMult$((a, b_x)) = (a, m_2 \cdot b_1)$.

These operations may maintain the shared a-part format, and the same a-part may be used after the operations.

Meanwhile, to utilize this property as described above, the conversion may be applied at each stage. First, the description below describes a forward format conversion (forward conversion).

Hereinafter, it is assumed that k RLWE ciphertexts $(a_i, b_i) \in R_Q^2$ satisfy Formula 16 below.

[Formula 16]

$$\forall i, 0 \leq i < k : a_i \cdot sk + b_i \approx m_i$$

A format conversion key $(a_{fmt-swk}, B_{fmt-swk})$ may be used to convert this ciphertext into k shared a-part ciphertexts $(a', b_i) \in R_Q^2$. Here, $a_{fmt-swk}$ is the a-part of the format conversion key, and $B_{fmt-swk,i}$ is a matrix associated with the i-th b-part.

This conversion process may be accomplished as follows.

[Equation 17]

$$a' = \frac{1}{P} \cdot ((a_0, ..., a_{k-1}) \cdot a_{fmt-swk} \bmod PQ)$$

,

$$(b'_0, ..., b'_{k-1}) = (b_0, ..., b_{k-1}) + \left\lfloor \frac{1}{P} \cdot ((a_0, ..., a_{k-1}) \cdot B_{fmt-swk} \bmod PQ) \right\rceil$$

An opposite conversion operation of the above-described conversion operation may be referred to as backward format conversion.

k shared a-part ciphertexts may be converted into the single ciphertext using the common secret key sk. This conversion may be performed using a KeySwitch algorithm, and after the conversion, the ciphertext may have the RLWE format, and the homomorphic operation (e.g., Sh-Add, Sh-PCMult, or Rescale) may be performed on the ciphertext using the shared a-part format. After undergoing this process, the ciphertext still shares the a-part. However, the secret key used in the ciphertext may be changed to their linear combination instead of original $sk_0$, ..., and $sk_{k-1}$.

An object of the backward format conversion is to convert the secret key in the form of the linear combination described above into the common secret key sk. To this end, the KeySwitch algorithm may be utilized.

For example, the ciphertext may be converted from the existing secret key $sk_0$, ..., and $sk_{k-1}$ to the single secret key sk. This process may use key switching (or switching key) involving the linear combination of $sk_0$, ..., and $sk_{k-1}$.

Hereinafter, based on the content described above, the description describes a new method of converting plaintext-ciphertext matrix multiplication (PC-MM) to plaintext-plaintext matrix multiplication (PP-MM).

Hereinafter, the description especially describes a case where the dimension exceeds d=N and a cases where the dimension does not exceed d=N. Basically, to perform the homomorphic computation, the ciphertext format may be converted into RLWE, MLWE, or the shared a-part RLWE or MLWE using multiple secret keys. This format conversion efficiently reduce the moduli in PP-MM.

For example, the MLWE format is suitable for low-dimensional PC-MM, while the shared a-part RLWE is effective for high-dimensional PC-MM. This conversion requires about O(dN) bit operations, which is a process that costs relatively little compared to a matrix multiplication cost if $N=\Omega(d^{1/2+c})$.

The algorithm in the present disclosure may provide a PP-MM result modularized by a small integer. However, PP-MM using an integer modulus may be slower than floating-point operation PP-MM utilizing real-valued fast linear algebra libraries (e.g., OpenBLAS).

To address this issue, the present disclosure utilizes a method of converting floating-point PC-MM into a single floating-point PP-MM and N/d moduli in PP-MM. In addition, the present disclosure may utilize an optimization method for converting floating-point PC-MM into the single floating-point PP-MM by allowing precomputation.

First, it is assumed that the coefficient-encoded ciphertext has a modulus of $Q_1 = q_0 q_1$. The following description assumes the use of a square matrix, while a rectangular matrix may also be used.

In the rectangular matrix, the number of columns in an encrypted matrix may affect an algorithm to be selected. For example, if the number of columns is greater than or less than N, the shared a-part RLWE or MLWE using multiple secret keys may be utilized respectively.

For the large matrix dimension (e.g., d ≥ N), a cost of PP-MM may not be negligible. Therefore, simply converting a single d×d×d floating-point PC-MM into two moduli d×d×d in PP-MM may not result in sufficient cost reduction.

To address this issue, the present disclosure utilizes a method of converting a single modulus d×d×d in PP-MM into a single modulus d×d×N in PP-MM.

The shared a-part RLWE using multiple secret keys may be utilized for this operation. The following description assumes that a dimension of the ciphertext is d=kN (here, k is an integer).

For example, the following description assumes that ciphertext $(a, b_j = a \cdot sk_j + m_j) \in R^2_{Q_1, N}(0 \leq j < k)$ is given. Here, $m_0$, ..., and $m_{k-1}$ are the message, and $sk_0$, ..., and $sk_{k-1}$ are the secret key. In this case, the following matrix equation having modulus $Q_1$ may be acquired.

[Equation 18]

$$a^T \cdot [Rot(sk_0) \cdots Rot(sk_{k-1})] + [b_0^T \cdots b_{k-1}^T] = [m_0^T \cdots m_{k-1}^T]$$

Here, a, $b_i$, and $m_i$ are N-dimensional vectors corresponding to a, $b_i$, and $m_i$, respectively.

Here, to encrypt matrix M having a size of d×d, each row may be encrypted using the above scheme. The single a-part and k secret keys may be used for each row.

For example, if an i-th row of M is encrypted, the ciphertext may be $(a_i, b_{ij} = a_i \cdot sk_j + m_{[jN,j(N+1]}) \in R^2_{Q, N}(0 \leq i < N, 0 \leq j < k)$. Here, $m_{[jN,j(N+1]}$ may consist of coefficients corresponding to $m_{i,jN}$, ..., and $nm_{i,j(N+1)-1}$. Accordingly, the above-described ciphertext may be referred to as a d×k shared a-part RLWE ciphertext bundle.

Given a d×d/N shared a-part RLWE ciphertext bundle

$$(a_i, b_{i,j} = a_i \cdot sk_j + m_{i[jN,j(N+1)]}) \in R^2_{Q_1,N}(0 \le i < N, 0 \le j < d/N)$$ , Equation 19 below may be established.

[Equation 19]

$$A \cdot [Rot(sk_0) \cdots Rot(sk_{d/N-1})] + B = M$$

Here, A and B are d×N and d×d matrices, respectively, which may be defined over $Z_{Q1}$.

On the other hand, if the above matrix equation is established, then there exist the d×d/N shared a-part RLWE ciphertext bundle consisting of $a_i$ and $b_{i,j}$, which may satisfy $(a_i, b_{i,j}) = (a_i, a_i \cdot sk_j + m_{i[jN,j(N+1)]})$.

Meanwhile, the PC-MM algorithm may be designed using Equation 19 above. For example, this algorithm may be operated using a method that multiplies both sides of Equation 19 by plaintext matrix U on the left. That is, encrypting a d×d matrix M by receiving a d×k shared a-part RLWE ciphertext bundle as input and then multiplying the same by U on the left gives the following matrix equation.

[Equation 20]

$$(U \cdot A) \cdot [Rot(sk_0) \cdots Rot(sk_{k-1})] + (U \cdot B) = (U \cdot M)$$

As a result, an encryption result corresponds to the d×k shared a-part RLWE ciphertext bundle, and U•M may be encrypted. Here, the computational cost may be d×d×N in PP-MM in case of multiplying U and A, and d×d×d in PP-MM in case of multiplying U and B.

To process PC-MM by using general RLWE format for input and output, the format first needs to be converted to match the a-part of each row with $sk_0$, ..., and $sk_{k-1}$. This format conversion may utilize the forward format conversion described above.

After this conversion, PC-MM may be performed, and finally, a conversion process back to the RLWE ciphertext sharing sk may be performed, thereby finally acquiring a U•M result through the backward format conversion. An algorithm for this entire operation may be shown in FIG. 4.

FIG. 4 is a diagram showing an example of the matrix operation according to an embodiment of the present disclosure.

Referring to FIG. 4, first, to split the homomorphic ciphertext into two ciphertexts, the following process may be seen: utilizing the forward format conversion described above, calculating each of the two split ciphertexts with the plaintext matrix, and performing the backward format conversion on its result to thus acquire a final operation result.

In this algorithm, operationally resource-intensive processes include performing d×d×N and d×d×d PP-MM, $O(d^2/N)$ format conversions, rescaling, and the key switching operations. A cost of non-PP-MM operations is approximately $O(d^2 \log Q_1)$ bit operations, which is relatively small compared to the matrix multiplication cost of $O(d^{\omega+\varepsilon})$ (here, $\omega \le 3$). Therefore, if d is sufficiently larger than N, an operational cost of the above algorithm may be PP-MM.

Meanwhile, if the matrix dimension d is smaller than the ring degree N, the matrix multiplication requires a higher level of granularity than that of the RLWE ring.

That is, to fully utilize the coefficients of the RLWE ciphertext, several columns, rows, or diagonals of the encrypted matrix may need to be included in the ciphertext. This configuration complicates the homomorphic computation and may require permutations and masking to extract appropriate data from the ciphertext as needed. This configuration inevitably leads to reliance on the key switching within the matrix multiplication algorithm.

That is, the key switching within PC-MM itself may prevent direct reduction to PC-MM and may not benefit from high-efficiency PP-MM software, thus resulting in the computational overhead.

Hereinafter, the description describes a method to avoid this issue.

The following description assumes that a k-th MLWE ciphertext $(a_j)_{0 \le j < k}, b = \Sigma_j a_j sk_j + m$ is given. Here, $a_j \in R_{Q1,N}, m$ is the message. In this case, a matrix equation such as Equation 21 satisfying modulus $Q_1$ may be established.

[Equation 21]

$$a^T \cdot \begin{bmatrix} Rot(Sk_0) \\ \vdots \\ Rot(Sk_{k-1}) \end{bmatrix} + b^T = m^T$$

Here, b and m are vectors corresponding to ring elements b and m of degree N, and a is a concatenation of vectors $a_j$. Assuming that multiple MLWE ciphertexts shared with sk = $(sk_j)_{0 \leq j < k}$ are given, this equation may be expanded into a matrix equation.

It may be assumed that a k-th MLWE ciphertext $ct_i = (a_{i,j})_{0 \leq j < k}, b_i = \Sigma_j a_{i,j} sk_j + m_{i,[0,d]}$ having n encoded coefficients, shared with sk = $(sk)_{0 \leq j < k}$, is given. Then, there exist the following n×kd matrix A and n×d matrix B, and the following Equation 22 may be established.

[Equation 22]

$$A \cdot \begin{bmatrix} Rot(Sk_0) \\ \vdots \\ Rot(Sk_{k-1}) \end{bmatrix} + B = M$$

Here, M is a message matrix. On the other hand, if the above equation is established, there may exist n k-th MLWE ciphertexts consisting of A and B.

Equation 22 above may be used to reduce PC-MM including the MLWE ciphertext to two moduli in PP-MM. It may be assumed that a d-dimensional MLWE ciphertext encrypts matrix M on a row-by-row basis. Here, k may be set to the degree of MLWE. Here, multiplying both sides of the above equation by U to multiply the matrices U and M gives Equation 23 below.

[Equation 23]

$$(U \cdot A) \cdot \begin{bmatrix} Rot(Sk_0) \\ \vdots \\ Rot(Sk_{k-1}) \end{bmatrix} + (U \cdot B) = (U \cdot M)$$

A result of Equation 23 corresponds to the k-th MLWE ciphertext of the dimension and may encrypt U•M. A computational cost of the corresponding Equation is d×d×dk in PP-MM and d×d×d in PP-MM.

PC-MM using general N-th RLWE input and output may utilize the conversion between N-th RLWE, k-th MLWE, and d-th MLWE, and reduce the same to PP-MM through the above conversion. An entire algorithm of this operation is shown in FIG. 5.

FIG. 5 is a diagram showing an example of the matrix operation according to an embodiment of the present disclosure.

Referring to FIG. 5, a detailed operation process is the same as that described above, and a main cost of an algorithm shown in FIG. 5 may be given by d×d×N and d×d×d PP-MM calculations, $O(d^2/N)$ conversions between RLWE and MLWE (modulus decomposition (ModDecomp) and modulus packing (ModPack)), and $O(d^2/N)$ rescaling operations.

This cost is relatively small compared to the matrix multiplication, which has complexity of $0((1+N/d) \cdot d^{\omega + \varepsilon})$.

The description above describes the operation for converting real-valued PC-MM to integer modulus PP-MM. However, fast matrix multiplication libraries such as OpenBLAS may be optimized for real-number input, and modulus PP-MM may thus be slower than real-valued PP-MM.

To address this issue, the following description describes a method for computing U•B by using a single real-valued PP-MM instead of modulus PP-MM.

In particular, the b-part of the RLWE/MLWE ciphertext may include the plaintext message information in a specific position of bits. For example, a CKKS ciphertext may include the plaintext message only in the most significant bits of the b-part, and its lower bits consist of numerical errors and RLWE/MLWE errors, which may be ignored.

Therefore, the most significant bits of U•B may be maintained without modulus $Q_1$ by multiplying the most significant bit of U and the most significant bit of B in the b-part U•B mod $Q_1$. This configuration may indicate that the most significant bits of U•B may be maintained using double-precision floating-point PP-MM as long as a target precision is not too large.

The precision required here may be determined by target precision and an overflow due to $Q_1$. A b-part bit-cutting method is a classic technique in lattice-based cryptography. The present disclosure applies this technique to PC-MM.

The following description describes a method that uses a floating-point operation to multiply b-part scalars of a single ciphertext.

First, it may be assumed that $b \in R_{Q1,N}(Q_1 = q_0q_1)$ is given. If residue number system (RNS) prime $q_1$ is used only for PC-MM, $q_0$ may be involved in another homomorphic computation (e.g., bootstrapping) besides scalar multiplication. For example, $q_1$ may be $2^{18}$ and $q_0$ may be $2^{58}$.

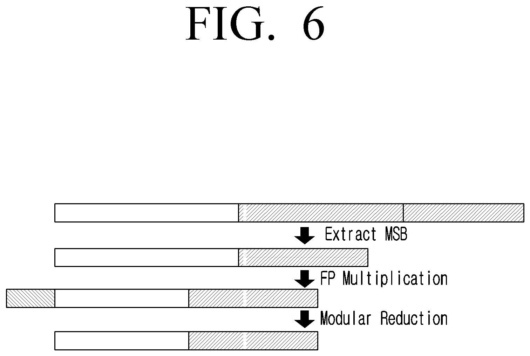

A scalar multiplication method of b is summarized as follows. This operation is described below with reference to FIG. 6.

FIG. 6 is a diagram for describing the scalar multiplication method according to an embodiment of the present disclosure.

Referring to FIG. 6, first, upper 53 bits of b may be extracted to acquire floating-point value $\tilde{b}$.

In addition, $Ecd(u) \in Z$, which encodes real scalar u as a coefficient, may be multiplied by the scaling factor $\Delta_1 = q_1$. Its result may be referred to as y.

In addition, y may be divided by $q_0q_1$ and its fractional part may be multiplied by $q_0$.

In this process, $\tilde{b}$ may include the upper 53 bits of b, and its size may be $Q_1 = q_0q_1$. y is approximately $q_1$ times larger, which may represent a real value of b multiplied by $Ecd(u)$ at approximately 53 bits of precision. An operation of dividing y by $q_0q_1$ may maintain the precision and reduce an output size to approximately $q_1$. As a result, approximately 53-$\log q1$ precision may be acquired for b' = ($Ecd(u) \cdot b \bmod q_0q_1$)/$q_1$.

This process may be extended to compute $UB \bmod Q_1$ for dxd matrices U and B by the floating-point operation. The upper 53 bits of each item may be extracted, floating-point PP-MM may then be performed, and the result may then be operated using modulus $q_0$. A computational amount requires $d^2$ modular operations, which may be less resource-intensive than the d-dimensional matrix multiplication. Empirically, the coefficients are expected to increase by factor $\sqrt{d}$, which may result in an output precision of approximately

$$\min\left(53 - \log q_1 - \log\right)\frac{q_0}{\Delta} - \frac{1}{2}\log d), \log q_1) bits$$

.

Meanwhile, a precision loss may be higher depending on the matrix to be multiplied. In particular, in the worst case, the above-described log d may need to be replaced by (log d)/2.

The following description describes an operation for utilizing the precomputation to reduce design of a single PP-MM from PC-MM.

This process may utilize floating-point PP-MMs instead of modular PP-MMs. In this way, PC-MMs may be optimized into the single floating-point PP-MM.

The description describes another matrix representation of multi-secret RLWE.

The following description assumes that the shared a-part RLWE ciphertext

$$(a, b_j = a \cdot sk_j + m_j) \in R^2_{Q_1,N}(0 \leq j < k)$$

having an encoded coefficient is given. In this case, a matrix equation such as Equation 24 satisfying modulus $Q_1$ may be established.

[Equation 24]

$$\begin{bmatrix} sk^T_0 \\ \vdots \\ sk^T_{k-1} \end{bmatrix} \cdot Rot(a) + \begin{bmatrix} b^T_0 \\ \vdots \\ b^T_{k-1} \end{bmatrix} = \begin{bmatrix} m^T_0 \\ \vdots \\ m^T_{k-1} \end{bmatrix}$$

Here, $sk_i$, $b_i$, and $m_i$ are column vectors consisting of coefficients, respectively. In addition, the Multi_secret RLWE scheme described above may be utilized to encrypt a d×d matrix where d≥N.

That is, given RLWE ciphertext $(a_i, b_{ij} = a_i \cdot sk_j + m_{[jN,j(N+1)]}) \in R^2_{Q_1,N}$ having the shared a-part having a size of d/N×d, the following equation may be established for 0≤i < d/N and 0≤j<d.

[Equation 25]

$$S \cdot \begin{bmatrix} Rot(a_0) \\ \cdots \\ Rot(a_{N/d-1}) \end{bmatrix} + B = M$$

The description describes a case where the above configuration is applied to a small dimension. Similar to the large-dimension case, the precomputation of US may be performed on key data, thereby reducing PC-MM to PP-MM of UB. For example, multiplying both sides of Equation 25 by U may be expressed as follows.

[Equation 26]

$$(US) \cdot \begin{bmatrix} Rot(a_0) \\ \cdots \\ Rot(a_{k-1}) \end{bmatrix} + (UB) = (UM)$$

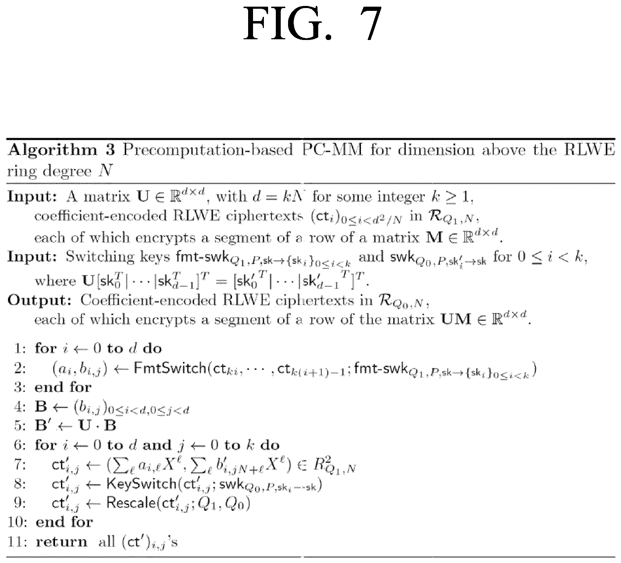

During an online section, PP-MM corresponding to the b-part may be evaluated, and the a-part may not be changed. In addition, switching from the US to a common RLWE secret key may also be precomputed. This operation is described below with reference to FIG. 7.

FIG. 7 is a diagram showing an example of the matrix operation according to an embodiment of the present disclosure. In detail, FIG. 7 is a diagram for describing the matrix operation process utilizing the precomputation.

Referring to FIG. 7, first, the RLWE format ciphertext may be converted into the shared a-part MLWE ciphertext. For example, shared modulus decomposition (ShModDecomp) processing may be utilized to convert the RLWE ciphertext into the shared a-part RLWE, and then convert the RLWE ciphertext into the MLWE ciphertext to thus maintain a property of the shared a-part.

A subsequent reversion may also include two steps. For example, the shared a-part MLWE ciphertext may be converted into the shared secret-key MLWE ciphertext by utilizing a modulus key switch. In addition, ModPack may be executed to acquire the RLWE ciphertext. In addition, if there is a key-switching key having a common RLWE the secret key in a US column, the shared a-part MLWE ciphertext may also be converted into a general RLWE ciphertext in one step.

The following description describes a method for accelerating the bootstrapping by leveraging the shared a-part in a situation where multiple ciphertexts need to be bootstrapped. First, the description describes a method for computing RLWE key switching, rotation, and conjugate conversion while maintaining the shared a-part.

Hereinafter, a ciphertext tuple is $ct_i = (a, b_i) \in R_{Q_1,N}^2 (0 \leq i < k)$, and for all i, $ct_i$ is an encrypted version of $m_i$ under the secret key $sk_i \in R_N$.

First, the description describes the key switching having the shared a-part.

Given two integers P and Q and secret key tuple $sk = (sk_i)_{0 \leq i < k}, sk' = (sk'_i)_{0 \leq i < k} \in R_N^k$, sh-SWKGen may perform the key switching from sk to sk' for the shared a-part ciphertext. This key may have the following form.

[Equation 27]

$$Sh\text{-}swk_{Q,P,sk \to sk'} = (a_{Sh\text{-}swk}, (b_{Sh\text{-}swk,i})_i)$$
$$= (a_{Sh\text{-}swk}, (-a_{Sh\text{-}swk} \cdot sk'_i + e_i + P \cdot sk_i)_i) \in R_{PQ,N} \times R_{PQ,N}^k$$

Here, $e_i$ has a small-sized coefficient.

The shared a-part switching key is a switching key consisting of k tuples, each having the shared a-part.

Next, the description describes the shared a-part key switching.

Shared a-part switching key Sh-swk = Sh-swk$_{Q,P, sk-> sk'}$ and the k tuples of ciphertext $ct_i = ((a, b_i)$ in the shared a-part format may be expressed by Equation 28.

[Equation 28]

$$((a', b'_i))_{0 \leq i < k} = (KeySwitch(Sh\text{-}swk_i, (a, b_i)))_{0 \leq i < k}$$

Through this configuration, it may be seen sh-KeySwich has an output in the shared a-part format and may be decrypted into $m_i$ by utilizing secret key $sk'_i$.

The shared a-part key switching process may define the shared a-part rotation and conjugation. For example, if the secret key is sk = $(sk_i)_{0 \leq i \leq k}$, then the rotation and conjugation may be expressed as follows.

Sh-rk$_{j,Q,P,sk}$ are shared a-part switching keys from secret key vector $sk_i(X^{5'}))_{0 < i < k}$ to the secret key.

Sh-ck$_{j,Q,P,sk}$ are shared a-part switching keys from secret key vector $sk_i(X^{-1}))_{0 \leq i < k}$ to the secret key vector sk.

The above-mentioned Sh-KeySwitch process uses Sh-rk$_{j,Q,P,sk}$ as the switching keys and rotate the ciphertext by using rotation function sh-Rot, which preserves the shared a-format.

The following description describes a method of using a shared a-part element to increase the efficiency of S2C and C2S bootstrapping steps.

Both S2C and C2S correspond to the product of plaintext matrix M and ciphertext ct, where the slot may be considered as an N/2 dimension vector. In these or subsequent steps, conjugation steps and additions may be performed. Matrix-vector multiplication may use the following diagonal method.

[Formula 29]

$$\sum_j Diag_j(M) \odot Rot_j(ct)$$

Here, $Diag_k(M) = (m_{0,k}, ..., m_{N/2-k-1,N/2-1}, m_{N/2-k,0}, ... m_{N/2-1,i-1})$ is a k-th diagonal of M, and j may pass through an index k to make Diagk(M) ≠ 0.

There may be a multi-shared a-part counterpart that may preserve a shared a-part structure in all operations used in Equation 29 above. Therefore, C2S and S2C may be converted into sh-S2C and sh-C2S by using their shared a-part counterparts. For example, Equation 29 above may be optimized using Baby Step Giant Step.

Finally, the following may be performed for the conversion into a shared s-part format. In detail, a sole process without a process where a bootstrapping processor corrects the shared a-part is an evaluation modulus (EvalMod) process. The reason is that the EvalMod process consists of evaluating a polynomial of the same degree, which requires ciphertext-ciphertext multiplication.

S2C-first bootstrapping performs the S2C forward format conversion, and the backward format conversion may be performed before EvalMod. For example, S2C-first bootstrapping may be performed in the following steps.
[FmtSwitch] → [Sh-S2C] → [ModRaise] → [Sh-C2S] → [Backward-FmtSwitch] → [EvalMod]

S2C-first bootstrapping may insert the forward and backward format conversions at the beginning and end of C2S and S2C each having the shared a-part format.
[FmtSwitch] → [ModRaise] → [Sh-C2S] → [Backward-FmtSwitch] → [EvalMod] → [FmtSwitch] → [Sh-S2C] → [Backward-FmtSwitch]

This batch bootstrapping is approximately twice as fast as a conventional bootstrapping operation. However, if the shared a-part format is used for the switching key, a key size may be increased linearly as k is increased. That is, the switching key size of rank k having the shared a-part format may be (k+1)/2 times larger than that of a single bit format.

The description above describes PC-MM for the coefficient-encoded ciphertext having a low modulus. The algorithm according to the present disclosure may actually be applied to PC-MM, and may be applied to various matrix multiplications as well as PC-MM.

The following description describes a method for combining the PC-MM algorithm and the bootstrapping to efficiently use the PC-MM algorithm during the FHE calculation.

PC-MM may perform operations on many ciphertexts, and thus use the bootstrapping. The bootstrapping used below is the batch bootstrapping scheme described above.

The description first describes its compatibility with the slot-encoded ciphertext.

A matrix size is assumed to be N x N, and a matrix modulus $Q_1$ may be expressed as follows.

[Equation 30]

$$AS + B = M$$

Here, A, B, M may correspond to coefficients of parts a, b, and m of the ciphertext, and S may include the secret key of a specific structure.

Now, it may be seen that coefficient-related matrix $M \in R^{N \times N}$ is actually related to slot-related matrix $M' \in C^{N \times N/2}$.

[Equation 31]

$$M' = MF$$

Here, F is a Vandermonde matrix having a size of N * N/2. Each scaled matrix U may be multiplied by Equation 32.

$$[\text{Equation 32}]$$

$$UM' = UMF$$

Therefore, PC-MM in slot encoding is equivalent to PC-MM in coefficient encoding.

There are three possible options for integrating the bootstrapping and the PC-MM algorithm as follows.

    1. S2C, coefficient-encoded PC-MM, and HalfBTS
    2. Slot-encoded PC-MM and then S2C-first bootstrapping.
    3. Slot-encoded PC-MMand then C22-first bootstrapping.

The first option may compute PC-MM at level 1 and S2C at level $\ell_{S2C} + 1$. The first option is the most efficient method. This option may be slower than PC-MM for the input ciphertext and compute S2C slightly faster compared to the other options.

The second option may be utilized if the input ciphertext is much larger than the output ciphertext. For example, if $U \in R^{d1 \times d2}$, in which d1 <<< d2, is multiplied, a S2C cost for the input ciphertext may be larger than a PC-MM cost, in which case the second option may be appropriate.

Finally, the third option may compute S2C at a higher level even though this option does not compute PC-MM at level 1. As a result, S2C on the output may be slow although PC-MM may be fast.

The third option may be advantageous in some limited scenarios. For example, if d1 is multiplied by $U \in R^{d1 \times d2}$, which is much smaller than d2, the S2C cost for the output may be negligible compared to the PC-MM cost, and the third option may thus be advantageous.

Overall, the first option may be the most efficient. The reason is that the first option may compute PC-MM at the lowest level and S2C at a much lower level.

The following description describes an operation for integrating PC-MM with fast batch bootstrapping.

All algorithms may be related to the ring switching. The following description assumes that PC-MM between the square matrices each having a size of dxd utilizes the first option described above. However, in implementation, PC-MM may utilize a rectangular matrices, and utilize the second or third option instead of the first option.

First, provided is a $\frac{\hat{d^2}}{N}$ slot-encoded RLWE-based FHE ciphertext having degree N. In this case, the modulus of the input ciphertext may be reduced to level $\ell S2C+1$. In addition, batch S2C may be calculated and converted into the $\frac{\hat{d^2}}{N}$ slot-encoded RLWE ciphertext having degree N at level 1.

In addition, a $\frac{\hat{d^2}N_1}{N}$ slot-encoded RLWE ciphertext having degree $N_1$ may be acquired by using the ring switching. This ring switching may provide more granularity for PC-MM, and the PC-MM algorithm may be selected based on $N_1$. Here, the subring degree $N_1$ needs to be sufficiently large compared to the ring switching key. That is, parameters $N_1$ and $PQ_1$ may be determined based on a security level.

Using the algorithm described above to calculate PC-MM, the $\frac{\hat{d^2}N_1}{N}$ slot-encoded RLWE ciphertext having degree $N_1$ may be acquired at level 0.

Finally, this result may be combined with the $\frac{\hat{d^2}}{N}$ slot-encoded RLWE ciphertext having degree N at level 0 by utilizing the ring switching, and batch HalfBTS (Modraise, Sh-C2S, and EvalMod) may be performed to thus complete the entire operation.

The following description describes an experimental result of a case where the algorithm described above is applied. The experimental result is shown in Table 1 below.

[Table 1]

| d | PP-MM (s) | Format conversion | S2C (s) | HalfBTS(s) | Precision (min) |
|---|---|---|---|---|---|
| $2^8$ | 0.61 | 0.21 | 1.73 | 24.1 | 15.9 |
| $2^{8*}$ | 0.42 | 0.2 | 1.66 | 23.8 | 10.9 |
| $2^9$ | 1.58 | 0.5 | 6.66 | 93.9 | 15.4 |
| $2^{9*}$ | 1.14 | 0.5 | 6.56 | 92.2 | 10.8 |
| $2^{10}$ | 5.17 | 1.39 | 26.7 | 353 | 14.9 |
| $2^{10*}$ | 3.8 | 1.39 | 26.7 | 353 | 9.9 |
| $2^{11}$ | 19.8 | 41.18 | 105 | 1520 | 14.3 |
| $2^{12}$ | 85.2 | 14.4 | 417.6 | 6044 | 13.7 |
| $(2^{13})$ | 244.5 | 24 + a | 1690 | - | - |

As shown in the table, it may be seen that each time increases as the dimension increases. For example, an existing PC-MM algorithm requires approximately 23 seconds for the plaintext matrix of $3,072 \times 768$ and the ciphertext matrix of $768 \times 128$. In contrast, the present disclosure may reduce the time by approximately 5 seconds under the same setting. Moreover, additional optimizations by the bootstrapping integration may achieve 20 to 30% performance improvement.

Meanwhile, the operation of the present disclosure may handle the large-scale matrix multiplication operation, which is important in the inference step of the large-scale language models such as LLaMA and GPT, as described above. In particular, the operation of the present disclosure may efficiently scale up even if a context size and a model dimension increase.

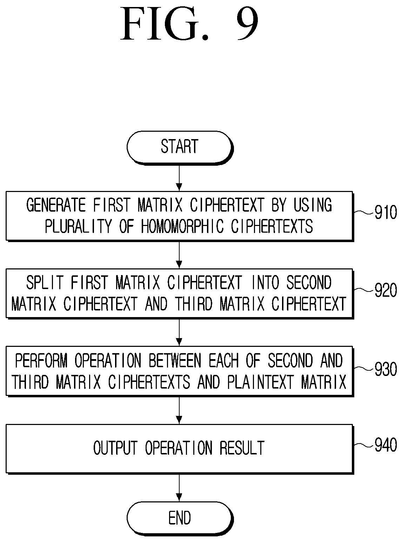

FIG. 9 is a flowchart for describing a method for processing a ciphertext according to an embodiment of the present disclosure.

Referring to FIG. 9, a first matrix ciphertext may be generated by disposing the plurality of homomorphic ciphertexts in the matrix form if the matrix operation command for the plurality of homomorphic ciphertexts is input (910). For example, the matrix operation command may be one of processes of performing the inference by the pre-trained learning model by using the encrypted user speech data as an input value.

Accordingly, the plurality of ciphertexts described above may be acquired by homomorphically encrypting the user speech or the text split into the token units utilized by the learning model described above. In addition, the weights included in the pre-trained learning model described above may be utilized in the operation commands described above in the matrix form.

Meanwhile, if the first matrix ciphertext is prepared in this manner, preprocessing (e.g., conversion described with reference to FIGS. 4 and 5) for the first matrix ciphertext may be performed. For example, if the first matrix ciphertext is generated by disposing the plurality of homomorphic ciphertexts, the modulus of the first homomorphic ciphertext may be converted, the first homomorphic ciphertext whose modulus is converted may be linearly transformed into a coefficient state, and the ring degree of the linearly transformed first homomorphic ciphertext may be converted. In addition, after performing this process, a split process described below may be performed.

In addition to this conversion process, a scheme change described with reference to FIG. 5 may also be utilized.

In addition, the first matrix ciphertext may be split into the second matrix ciphertext and the third matrix ciphertext that satisfy predetermined conditions (920). For example, the first matrix ciphertext may be split to ensure that the first matrix ciphertext remains within an error range if the second matrix ciphertext is multiplied by a Toeplitz matrix and the third matrix ciphertext is added to its result.

In addition, the first homomorphic ciphertext may also be split to ensure that the a-parts remain identical, while only the b-parts differ.

In addition, the matrix operation result may be acquired by performing the matrix operation between each of the second matrix ciphertext and the third matrix ciphertext and the plaintext matrix corresponding to the matrix operation command (S930). For example, the homomorphic operation between each of the previously split ciphertext matrices and the plaintext matrix may be performed. If the two split ciphertexts share the a-part, the operation for the a-part only needs to be performed a single time in the operation process described above, which may reduce operation resources.

The ring degree of the homomorphic ciphertext corresponding to the operation result may then be converted, and the modulus of the homomorphic ciphertext whose ring degree is converted may be changed. Such modulus change may be performed by utilizing the bootstrapping scheme.

Here, the bootstrapping may utilize halfBTS. For example, the message may be stored in the coefficient side in the previous process, and the linear conversion process of converting the slots into the coefficients in the bootstrapping scheme may thus utilize halfBTS, which includes the omitted remaining steps.

Although the various embodiments are individually described hereinabove, each embodiment is not necessarily implemented alone, and may also be implemented partially or fully coupled with at least one other embodiment.

The various embodiments of the present disclosure may be implemented in software including an instruction stored on a machine-readable storage medium (e.g., computer-readable storage medium). A machine may be a device that invokes the stored instruction from a storage medium, may be operated based on the invoked instruction, and may include the electronic apparatus 100 or 200 according to the disclosed embodiments.

For example, a non-transitory readable storage medium storing software for sequentially performing various steps as shown in FIG. 9 may be provided.

A device including the non-transitory readable medium may perform the operation such as public key generation, encryption, or decryption, as described in the various embodiments described above.

The term "non-transitory" indicates that the storage medium is tangible without including a signal, and does not distinguish whether data are semi-permanently or temporarily stored on the storage medium.

Alternatively, a program for performing the method according to the various embodiments described above may be distributed online via an application store. In case of the online distribution, at least portions of the computer program product may be at least temporarily stored on a storage medium such as the memory of a server of a manufacturer, a server of an application store or a relay server, or be temporarily generated.

Each of the components (for example, modules or programs) according to the various embodiments may include a single entity or a plurality of entities, and some of the corresponding sub-components described above may be omitted or other sub-components may be further included in the various embodiments. Alternatively or additionally, some of the components (for example, the modules or the programs) may be integrated into the single entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the present disclosure is described hereinabove with reference to the accompanying drawings, the scope of the present disclosure is determined based on the claims described below and should not be construed as being limited to the embodiments and drawings provided above. In addition, it should be clearly understood that improvements, changes, and modifications apparent to those skilled in the art of the present disclosure described in the claims are also included in the scope of the present disclosure.

**Claims**

1. An electronic apparatus comprising:

    a memory (110) for storing an instruction; and
    a processor (120) configured to execute the instruction,
    wherein the processor is configured to
    generate a first matrix ciphertext by disposing a plurality of homomorphic ciphertexts in a matrix form if a matrix operation command for the plurality of homomorphic ciphertexts is input,
    split the first matrix ciphertext into a second matrix ciphertext and a third matrix ciphertext that satisfy predetermined conditions, and
    acquire a matrix operation result by performing a matrix operation between each of the second matrix ciphertext and the third matrix ciphertext and a plaintext matrix corresponding to the matrix operation command.

2. The apparatus as claimed in claim 1, wherein the processor is configured to split the first matrix ciphertext to ensure that the first matrix ciphertext remains within an error range if the second matrix ciphertext is multiplied by a Toeplitz matrix and the third matrix ciphertext is added to its result.

3. The apparatus as claimed in claim 1, wherein each homomorphic ciphertext includes an a-part and a b-part, and the processor is configured to generate a second homomorphic ciphertext and a third homomorphic ciphertext to ensure that the a-parts remain identical, while only the b-parts differ.

4. The apparatus as claimed in claim 1, wherein the processor is configured to

    convert a modulus of a first homomorphic ciphertext,

linearly transform the first homomorphic ciphertext whose modulus is converted into a coefficient state, convert a ring degree of the linearly transformed first homomorphic ciphertext, and split a second homomorphic ciphertext whose ring degree is converted into the second homomorphic ciphertext and a third homomorphic ciphertext.

5. The apparatus as claimed in claim 4, wherein the processor is configured to

   convert the ring degree of the homomorphic ciphertext corresponding to the operation result, and change the modulus of the homomorphic ciphertext whose ring degree is converted.

6. The apparatus as claimed in claim 5, wherein the processor is configured to bootstrap the homomorphic ciphertext whose ring degree is converted to convert the modulus of the homomorphic ciphertext whose ring degree is converted.

7. The apparatus as claimed in claim 1, wherein the plurality of homomorphic ciphertexts are acquired by splitting text and homomorphically encrypting the respective split texts, and the plaintext matrix is a weight matrix included in a pre-trained model.

8. The apparatus as claimed in claim 7, wherein the plurality of homomorphic ciphertexts are acquired by splitting the text into token units utilized by the pre-trained model.

9. A method for processing a ciphertext in an electronic apparatus, the method comprising:

   generating a first matrix ciphertext by disposing the plurality of homomorphic ciphertexts in a matrix form if a matrix operation command for the plurality of homomorphic ciphertexts is input;
   splitting the first matrix ciphertext into a second matrix ciphertext and a third matrix ciphertext that satisfy predetermined conditions; and
   acquiring a matrix operation result by performing a matrix operation between each of the second matrix ciphertext and the third matrix ciphertext and a plaintext matrix corresponding to the matrix operation command.

10. The method as claimed in claim 9, wherein in the splitting, the first matrix ciphertext is split to ensure that the first matrix ciphertext remains within an error range if the second matrix ciphertext is multiplied by a Toeplitz matrix and the third matrix ciphertext is added to its result.

11. The method as claimed in claim 9, wherein each homomorphic ciphertext includes an a-part and a b-part, and

    wherein in the splitting,
    a second homomorphic ciphertext and a third homomorphic ciphertext are generated to ensure that the a-parts remain identical, while only the b-parts differ.

12. The method as claimed in claim 9, further comprising:

    converting a modulus of a first homomorphic ciphertext;
    linearly transforming the first homomorphic ciphertext whose modulus is converted into a coefficient state; and
    converting a ring degree of the linearly transformed first homomorphic ciphertext.

13. The method as claimed in claim 12, further comprising:

    converting the ring degree of the homomorphic ciphertext corresponding to the operation result; and
    changing the modulus of the homomorphic ciphertext whose ring degree is converted.

14. The method as claimed in claim 13, wherein in the changing of the modulus, the homomorphic ciphertext whose ring degree is converted is bootstrapped to convert the modulus of the homomorphic ciphertext whose ring degree is converted.

15. A computer-readable recording medium including a program for executing a method for processing a ciphertext, wherein the method includes

generating a first matrix ciphertext by disposing the plurality of homomorphic ciphertexts in a matrix form if a matrix operation command for the plurality of homomorphic ciphertexts is input,

splitting the first matrix ciphertext into a second matrix ciphertext and a third matrix ciphertext that satisfy predetermined conditions, and

acquiring a matrix operation result by performing a matrix operation between each of the second matrix ciphertext and the third matrix ciphertext and a plaintext matrix corresponding to the matrix operation command.


**Patentansprüche**

1.  Elektronisches Gerät, umfassend:

    einen Speicher (110) zum Speichern einer Anweisung; und einen Prozessor (120), der konfiguriert ist, um die Anweisung auszuführen,

    wobei der Prozessor konfiguriert ist, zum Erzeugen eines ersten Matrixchiffretextes durch Anordnen einer Vielzahl von homomorphen Chiffretexten in einer Matrixform, wenn ein Matrixoperationsbefehl für die Vielzahl von homomorphen Chiffretexten eingegeben wird, Aufspalten des ersten Matrixchiffretextes in einen zweiten Matrixchiffretext und einen dritten Matrixchiffretext, die vorbestimmte Bedingungen erfüllen, und

    Erhalten eines Matrixoperationsergebnisses durch Ausführen einer Matrixoperation zwischen dem zweiten Matrixchiffretext und dem dritten Matrixchiffretext und einer Klartextmatrix, die dem Matrixoperationsbefehl entspricht.

2.  Gerät nach Anspruch 1, wobei der Prozessor konfiguriert ist, um den ersten Matrixchiffretext zu teilen, um sicherzustellen, dass der erste Matrixchiffretext innerhalb eines Fehlerbereichs bleibt, wenn der zweite Matrixchiffretext mit einer Toeplitzmatrix multipliziert wird und der dritte Matrixchiffretext zu seinem Ergebnis hinzugefügt wird.

3.  Gerät nach Anspruch 1, wobei jeder homomorphe Chiffriertext einen a-Teil und einen b-Teil einschließt, und der Prozessor konfiguriert ist, um einen zweiten homomorphen Chiffretext und einen dritten homomorphen Chiffretext zu erzeugen, um sicherzustellen, dass die a-Teile identisch bleiben, während sich nur die b-Teile unterscheiden.

4.  Gerät nach Anspruch 1, wobei der Prozessor konfiguriert ist zum

    Konvertieren eines Moduls eines ersten homomorphen Chiffretextes,
    lineares Transformieren des ersten homomorphen Chiffretextes, dessen Modulus in einen Koeffizientenstatus umgewandelt wird,
    Konvertieren eines Ringgrades des linear transformierten ersten homomorphen Chiffriertextes, und
    Aufspalten eines zweiten homomorphen Chiffretextes, dessen Ringgrad in den zweiten homomorphen Chiffretext umgewandelt wird, und eines dritten homomorphen Chiffretextes.

5.  Gerät nach Anspruch 4, wobei der Prozessor konfiguriert ist zum

    Konvertieren des Ringgrades des homomorphen Chiffriertextes, der dem Operationsergebnis entspricht, und
    Ändern des Moduls des homomorphen Chiffriertextes, dessen Ringgrad konvertiert wird.

6.  Gerät nach Anspruch 5, wobei der Prozessor konfiguriert ist, um den homomorphen Chiffretext, dessen Ringgrad konvertiert wird, zu booten, um den Modulus des homomorphen Chiffretextes, dessen Ringgrad konvertiert wird, zu konvertieren.

7.  Gerät nach Anspruch 1, wobei die Vielzahl homomorpher Chiffriertexte durch Aufteilen von Text und homomorphes Verschlüsseln der jeweiligen aufgeteilten Texte gewonnen wird, und
    die Klartextmatrix eine Gewichtungsmatrix ist, die in ein vortrainiertes Modell eingeschlossen ist.

8.  Gerät nach Anspruch 7, wobei die Vielzahl homomorpher Chiffriertexte durch Aufteilen des Textes in Tokeneinheiten gewonnen wird, die von dem vortrainierten Modell verwendet werden.

9.  Verfahren zum Verarbeiten eines Chiffriertextes in einem elektronischen Gerät, das Verfahren umfassend:

    Erzeugen eines ersten Matrixchiffretextes durch Anordnen der Vielzahl von homomorphen Chiffretexten in einer Matrixform, wenn ein Matrixoperationsbefehl für die Vielzahl von homomorphen Chiffretexten eingegeben wird;
Aufspalten des ersten Matrixchiffretextes in einen zweiten Matrixchiffretext und einen dritten Matrixchiffretext, die vorbestimmte Bedingungen erfüllen; und
Erhalten eines Matrixoperationsergebnisses durch Ausführen einer Matrixoperation zwischen dem zweiten Matrixchiffretext und dem dritten Matrixchiffretext und einer Klartextmatrix, die dem Matrixoperationsbefehl entspricht.

10. Verfahren nach Anspruch 9, wobei beim Aufspalten, der erste Matrixchiffretext gespalten wird, um sicherzustellen, dass der erste Matrixchiffretext innerhalb eines Fehlerbereichs bleibt, wenn der zweite Matrixchiffretext mit einer Toeplitzmatrix multipliziert wird und der dritte Matrixchiffretext zu seinem Ergebnis hinzugefügt wird.

11. Verfahren nach Anspruch 9, wobei jeder homomorphe Chiffriertext einen a-Teil und einen b-Teil einschließt, und

wobei beim Aufspalten,
ein zweiter homomorpher Chiffriertext und ein dritter homomorpher Chiffriertext erzeugt werden, um sicherzustellen, dass die a-Teile identisch bleiben, während sich nur die b-Teile unterscheiden.

12. Verfahren nach Anspruch 9, ferner umfassend:

Konvertieren eines Moduls eines ersten homomorphen Chiffretextes;
lineares Transformieren des ersten homomorphen Chiffretextes, dessen Modulus in einen Koeffizientenstatus umgewandelt wird; und
Konvertieren eines Ringgrades des linear transformierten ersten homomorphen Chiffriertextes.

13. Verfahren nach Anspruch 12, ferner umfassend:

Konvertieren des Ringgrades des homomorphen Chiffriertextes, der dem Operationsergebnis entspricht; und
Ändern des Moduls des homomorphen Chiffriertextes, dessen Ringgrad konvertiert wird.

14. Verfahren nach Anspruch 13, wobei beim Ändern des Moduls,
der homomorphe Chiffriertext, dessen Ringgrad konvertiert wird, gebootstrapt wird, um den Modulus des homomorphen Chiffriertextes zu konvertieren, dessen Ringgrad konvertiert wird.

15. Computerlesbares Aufzeichnungsmedium, das ein Programm zum Ausführen eines Verfahrens zum Verarbeiten eines Chiffriertextes einschließt, wobei das Verfahren Folgendes umfasst

Erzeugen eines ersten Matrixchiffretextes durch Anordnen der Vielzahl von homomorphen Chiffretexten in einer Matrixform, wenn ein Matrixoperationsbefehl für die Vielzahl von homomorphen Chiffretexten eingegeben wird,
Aufspalten des ersten Matrixchiffretextes in einen zweiten Matrixchiffretext und einen dritten Matrixchiffretext, die vorbestimmte Bedingungen erfüllen; und
Erhalten eines Matrixoperationsergebnisses durch Ausführen einer Matrixoperation zwischen dem zweiten Matrixchiffretext und dem dritten Matrixchiffretext und einer Klartextmatrix, die dem Matrixoperationsbefehl entspricht.

## Revendications

1. Appareil électronique comprenant :

une mémoire (110) pour stocker une instruction ; et
un processeur (120) configuré pour exécuter l'instruction,
dans lequel le processeur est configuré pour
générer un premier texte chiffré matriciel en disposant une pluralité de textes chiffrés homomorphes sous forme de matrice si une commande d'opération matricielle pour la pluralité de textes chiffrés homomorphes est entrée,
diviser le premier texte chiffré matriciel en un deuxième texte chiffré matriciel et un troisième texte chiffré matriciel qui satisfont à des conditions prédéterminées, et
obtenir le résultat d'une opération matricielle en réalisant une opération matricielle entre chacun du deuxième texte chiffré matriciel et du troisième texte chiffré matriciel et une matrice de texte clair correspondant à la commande d'opération matricielle.

2. Appareil selon la revendication 1, dans lequel le processeur est configuré pour diviser le premier texte chiffré matriciel afin de garantir que le premier texte chiffré matriciel reste dans une plage d'erreur si le deuxième texte chiffré matriciel est multiplié par une matrice de Toeplitz et que le troisième texte chiffré matriciel est ajouté à son résultat.

3. Appareil selon la revendication 1, dans lequel chaque texte chiffré homomorphe comporte une partie a et une partie b, et le processeur est configuré pour générer un deuxième texte chiffré homomorphe et un troisième texte chiffré homomorphe afin de garantir que les parties a restent identiques, tandis que seules les parties b diffèrent.

4. Appareil selon la revendication 1, dans lequel le processeur est configuré pour

convertir un module d'un premier texte chiffré homomorphe,
transformer linéairement le premier texte chiffré homomorphe dont le module est converti en un état de coefficient,
convertir un degré d'anneau du premier texte chiffré homomorphe transformé linéairement, et
diviser un deuxième texte chiffré homomorphe dont le degré d'anneau est converti en un deuxième texte chiffré homomorphe et un troisième texte chiffré homomorphe.

5. Appareil selon la revendication 4, dans lequel le processeur est configuré pour

convertir le degré d'anneau du texte chiffré homomorphe correspondant au résultat d'opération, et
modifier le module du texte chiffré homomorphe dont le degré d'anneau est converti.

6. Appareil selon la revendication 5, dans lequel le processeur est configuré pour amorcer le texte chiffré homomorphe dont le degré d'anneau est converti afin de convertir le module du texte chiffré homomorphe dont le degré d'anneau est converti.

7. Appareil selon la revendication 1, dans lequel la pluralité de textes chiffrés homomorphes est obtenue en divisant le texte et en chiffrant de manière homomorphe les textes divisés respectifs, et
la matrice de texte clair est une matrice de pondération incluse dans un modèle pré-entraîné.

8. Appareil selon la revendication 7, dans lequel la pluralité de textes chiffrés homomorphes est acquise en divisant le texte en unités de jetons utilisées par le modèle pré-entraîné.

9. Procédé de traitement d'un texte chiffré dans un appareil électronique, le procédé comprenant :

la génération d'un premier texte chiffré matriciel en disposant la pluralité de textes chiffrés homomorphes sous forme matricielle si une commande d'opération matricielle pour la pluralité de textes chiffrés homomorphes est entrée ;
la division du premier texte chiffré matriciel en un deuxième texte chiffré matriciel et un troisième texte chiffré matriciel qui satisfont à des conditions prédéterminées ; et
l'acquisition d'un résultat d'opération matricielle en réalisant une opération matricielle entre chacun du deuxième texte chiffré matriciel et du troisième texte chiffré matriciel et une matrice de texte clair correspondant à la commande d'opération matricielle.

10. Procédé selon la revendication 9, dans lequel, lors de la division,
le premier texte chiffré matriciel est divisé pour garantir que le premier texte chiffré matriciel reste dans une plage d'erreur si le deuxième texte chiffré matriciel est multiplié par une matrice de Toeplitz et que le troisième texte chiffré matriciel est ajouté à son résultat.

11. Procédé selon la revendication 9, dans lequel chaque texte chiffré homomorphe comporte une partie a et une partie b, et

dans lequel, lors de la division,
un deuxième texte chiffré homomorphe et un troisième texte chiffré homomorphe sont générés pour garantir que les parties a restent identiques, tandis que seules les parties b diffèrent.

**12.** Procédé selon la revendication 9, comprenant en outre :

la conversion d'un module d'un premier texte chiffré homomorphe ;
la transformation linéaire du premier texte chiffré homomorphe dont le module est converti en un état de coefficient ; et
la conversion d'un degré d'anneau du premier texte chiffré homomorphe transformé linéairement.

**13.** Procédé selon la revendication 12, comprenant en outre :

la conversion du degré d'anneau du texte chiffré homomorphe correspondant au résultat d'opération ; et
la modification du module du texte chiffré homomorphe dont le degré d'anneau est converti.

**14.** Procédé selon la revendication 13, dans lequel, lors de la modification du module,
le texte chiffré homomorphe dont le degré d'anneau est converti est amorcé pour convertir le module du texte chiffré homomorphe dont le degré d'anneau est converti.

**15.** Support d'enregistrement lisible par ordinateur comportant un programme permettant d'exécuter un procédé de traitement d'un texte chiffré, dans lequel le procédé comporte

la génération d'un premier texte chiffré matriciel en disposant la pluralité de textes chiffrés homomorphes sous forme de matrice si une commande d'opération matricielle pour la pluralité de textes chiffrés homomorphes est entrée,
la division du premier texte chiffré matriciel en un deuxième texte chiffré matriciel et un troisième texte chiffré matriciel qui satisfont à des conditions prédéterminées, et
l'acquisition d'un résultat d'opération matricielle en réalisant une opération matricielle entre chacun du deuxième texte chiffré matriciel et du troisième texte chiffré matriciel et une matrice de texte clair correspondant à la commande d'opération matricielle.

# FIG. 1

200

FIRST SERVER

$Ct_1, Ct_2$    $Ct_1+Ct_2$

10    NETWORK    $Ct_1+Ct_2$    300    SECOND SERVER

$Ct_1$    $Ct_2$

FIRST ELECTRONIC APPARATUS    SECOND ELECTRONIC APPARATUS    . . .    N-TH ELECTRONIC APPARATUS

100-1    100-2    100-n

# FIG. 2

<u>100</u>

110                    120

| MEMORY | ←→ | PROCESSOR |

# FIG. 3

<u>100</u>

# FIG. 4

**Algorithm 1** PC-MM for dimension above the RLWE ring degree $N$

**Input:** A matrix $\mathbf{U} \in \mathbb{R}^{d \times d}$, with $d = kN$ for some integer $k \geq 1$,
    coefficient-encoded RLWE ciphertexts $(\mathsf{ct}_i)_{0 \leq i < d^2/N}$ in $\mathcal{R}_{Q_1,N}$,
    each of which encrypts a segment of a row of a matrix $\mathbf{M} \in \mathbb{R}^{d \times d}$.
**Input:** Switching keys $\mathsf{fmt\text{-}swk}_{Q_1,P,\mathsf{sk} \to \{\mathsf{sk}_i\}_{0 \leq i < k}}$ and $\mathsf{swk}_{Q_0,P,\mathsf{sk}_i \to \mathsf{sk}}$ for $0 \leq i < k$.
**Output:** Coefficient-encoded RLWE ciphertexts in $\mathcal{R}_{Q_0,N}$,
    each of which encrypts a segment of a row of the matrix $\mathbf{UM} \in \mathbb{R}^{d \times d}$.

1: **for** $i \leftarrow 0$ **to** $d$ **do**
2:    $(a_i, b_{i,j}) \leftarrow \mathsf{FmtSwitch}(\mathsf{ct}_{ki}, \cdots, \mathsf{ct}_{k(i+1)-1}; \mathsf{fmt\text{-}swk}_{Q_1,P,\mathsf{sk} \to \{\mathsf{sk}_i\}_{0 \leq i < k}})$
3: **end for**
4: $(\mathbf{A}, \mathbf{B}) \leftarrow ((a_{i,j})_{0 \leq i < d, 0 \leq j < N}, (b_{i,j})_{0 \leq i < d, 0 \leq j < d})$
5: $(\mathbf{A}', \mathbf{B}') \leftarrow (\mathbf{U} \cdot \mathbf{A}, \mathbf{U} \cdot \mathbf{B})$
6: **for** $i \leftarrow 0$ **to** $d$ **and** $j \leftarrow 0$ **to** $d/N$ **do**
7:    $\mathsf{ct}'_{i,j} \leftarrow (\sum_k a'_{i,k} X^k, \sum_k b'_{i,jN+k} X^k) \in R^2_{Q_1,N}$
8:    $\mathsf{ct}'_{i,j} \leftarrow \mathsf{Rescale}(\mathsf{ct}'_{i,j}; Q_1, Q_0)$
9:    $\mathsf{ct}'_{i,j} \leftarrow \mathsf{KeySwitch}(\mathsf{ct}'_{i,j}; \mathsf{swk}_{Q_0,P,\mathsf{sk}_i \to \mathsf{sk}})$
10: **end for**
11: **return** all $(\mathsf{ct}')_{i,j}$'s

# FIG.  5

---

**Algorithm 2** PC-MM for dimension below the RLWE ring degree $N$

---

**Input:** A matrix $\mathbf{U} \in \mathbb{R}^{d \times d}$, with $N = k \cdot d$ for some integer $k \geq 1$,
   coefficient-encoded RLWE ciphertexts $(\text{ct}_i)_{0 \leq i < d^2/N}$ in $\mathcal{R}_{Q_1,N}$,
   each of which encrypts a strip of rows of a matrix $\mathbf{M} \in \mathbb{R}^{d \times d}$.
**Input:** Switching keys for ModPack
**Output:** Coefficient-encoded RLWE ciphertexts in $\mathcal{R}_{Q_0,N}$,
   each of which encrypts a strip of rows of the matrix $\mathbf{UM} \in \mathbb{R}^{d \times d}$.

1: **for** $i \leftarrow 0$ **to** $d^2/N$ **do**
2:    $((\mathbf{a}_{di+j}, b_{di+j}))_{0 \leq j < k} \leftarrow \text{ModDecomp}(\text{ct}_i)$
3: **end for**
4: **for** $i \leftarrow 0$ **to** $d$ **do**
5:    Set the $i$-th row of $\mathbf{A}$ as the concatenation of coefficients of $\mathbf{a}_i$
6:    Set the $i$-th row of $\mathbf{B}$ as the coefficients of $b_i$
7: **end for**
8: $(\mathbf{A}', \mathbf{B}') \leftarrow (\mathbf{UA}, \mathbf{UB})$
9: **for** $i \leftarrow 0$ **to** $d$ **do**
10:    Set the concatenation of coefficients of $\mathbf{a}'_i$ as the $i$-th row of $\mathbf{A}'$
11:    Set the coefficients of $b_i$ as the $i$-th row of $\mathbf{B}'$
12:    Rescale $((\mathbf{a}'_i, b_i); Q_1, Q_0)$
13: **end for**
14: **for** $i \leftarrow 0$ **to** $d^2/N$ **do**
15:    $\text{ct}'_i \leftarrow \text{ModPack}((a'_{di+j}, b'_{di+j})_{0 \leq j < k})$
16: **end for**
17: **return** all $\text{ct}'_i$'s

---

# FIG. 6

Extract MSB

FP Multiplication

Modular Reduction

# FIG. 7

---

**Algorithm 3** Precomputation-based PC-MM for dimension above the RLWE ring degree $N$

---

**Input:** A matrix $\mathbf{U} \in \mathbb{R}^{d \times d}$, with $d = kN$ for some integer $k \geq 1$,
coefficient-encoded RLWE ciphertexts $(\mathsf{ct}_i)_{0 \leq i < d^2/N}$ in $\mathcal{R}_{Q_1, N}$,
each of which encrypts a segment of a row of a matrix $\mathbf{M} \in \mathbb{R}^{d \times d}$.

**Input:** Switching keys $\mathsf{fmt\text{-}swk}_{Q_1, P, \mathsf{sk} \to \{\mathsf{sk}_i\}_{0 \leq i < k}}$ and $\mathsf{swk}_{Q_0, P, \mathsf{sk}'_i \to \mathsf{sk}}$ for $0 \leq i < k$,
where $\mathbf{U}[\mathsf{sk}_0^T | \cdots | \mathsf{sk}_{d-1}^T]^T = [\mathsf{sk}_0'^T | \cdots | \mathsf{sk}_{d-1}'^T]^T$.

**Output:** Coefficient-encoded RLWE ciphertexts in $\mathcal{R}_{Q_0, N}$,
each of which encrypts a segment of a row of the matrix $\mathbf{UM} \in \mathbb{R}^{d \times d}$.

---

1: **for** $i \leftarrow 0$ **to** $d$ **do**
2: $\quad (a_i, b_{i,j}) \leftarrow \mathsf{FmtSwitch}(\mathsf{ct}_{ki}, \cdots, \mathsf{ct}_{k(i+1)-1}; \mathsf{fmt\text{-}swk}_{Q_1, P, \mathsf{sk} \to \{\mathsf{sk}_i\}_{0 \leq i < k}})$
3: **end for**
4: $\mathbf{B} \leftarrow (b_{i,j})_{0 \leq i < d, 0 \leq j < d}$
5: $\mathbf{B}' \leftarrow \mathbf{U} \cdot \mathbf{B}$
6: **for** $i \leftarrow 0$ **to** $d$ **and** $j \leftarrow 0$ **to** $k$ **do**
7: $\quad \mathsf{ct}'_{i,j} \leftarrow (\sum_\ell a_{i,\ell} X^\ell, \sum_\ell b'_{i,jN+\ell} X^\ell) \in R_{Q_1, N}^2$
8: $\quad \mathsf{ct}'_{i,j} \leftarrow \mathsf{KeySwitch}(\mathsf{ct}'_{i,j}; \mathsf{swk}_{Q_0, P, \mathsf{sk}_i \to \mathsf{sk}})$
9: $\quad \mathsf{ct}'_{i,j} \leftarrow \mathsf{Rescale}(\mathsf{ct}'_{i,j}; Q_1, Q_0)$
10: **end for**
11: **return** all $(\mathsf{ct}')_{i,j}$'s

---

# FIG. 8

---

**Algorithm 4** Precomputation-based PC-MM for dimension below the RLWE ring degree $N$

---

**Input:** A matrix $\mathbf{U} \in \mathbb{R}^{d \times d}$, with $N = kd$ for some integer $k \geq 1$,
    coefficient-encoded RLWE ciphertexts $(\mathsf{ct}_i)_{0 \leq i < d^2/N}$ in $\mathcal{R}_{Q_1,N}$,
    each of which encrypts a strip of rows of a matrix $\mathbf{M} \in \mathbb{R}^{d \times d}$.

**Input:** Switching keys $\mathsf{fmt\text{-}swk}_{Q_1,P,\mathsf{sk} \to \{\mathsf{sk}_i\}_{0 \leq i < d^2/N}}$, $\mathsf{swk}_{Q_0,P,\mathsf{sk}'_i \to \mathsf{sk}}$ for $0 \leq i < k$,
    where $\mathbf{U}[\mathsf{sk}_0^T | \cdots | \mathsf{sk}_{d-1}^T]^T = [\mathsf{sk}_0'^T | \cdots | \mathsf{sk}_{d-1}'^T]^T$, and switching keys for $\mathsf{ModPack}$

**Output:** Coefficient-encoded RLWE ciphertexts in $\mathcal{R}_{Q_0,N}$,
    each of which encrypts a strip of rows of the matrix $\mathbf{UM} \in \mathbb{R}^{d \times d}$.

1: $(a, b_i) \leftarrow \mathsf{FmtSwitch}(\mathsf{ct}_i)_{0 \leq i < d^2/N}; \mathsf{fmt\text{-}swk}_{Q_1,P,\mathsf{sk} \to \{\mathsf{sk}_i\}_{0 \leq i < d^2/N}})$

2: **for** $i \leftarrow 0$ **to** $d^2/N$ **do**

3:     $((\mathsf{a}_{di+j}, b_{di+j}))_{0 \leq j < k} \leftarrow \mathsf{ModDecomp}(\mathsf{ct}_i)$

4: **end for**

5: **for** $i \leftarrow 0$ **to** $d$ **do**

6:     Set the $i$-th row of $\mathbf{B}$ as the coefficients of $b_i$

7: **end for**

8: $\mathbf{B}' \leftarrow \mathbf{UB}$

9: **for** $i \leftarrow 0$ **to** $d$ **do**

10:     Set the coefficients of $b_i'$ as the $i$-th row of $\mathbf{B}'$

11: **end for**

12: **for** $i \leftarrow 0$ **to** $d^2/N$ **do**

13:     **for** $j \leftarrow 0$ **to** $k$ **do**

14:         $(a_{di+j}', b_{di+j}') \leftarrow \mathsf{KeySwitch}((a_{di+j}', b_{di+j}'); \mathsf{swk}_{Q_0,P,\mathsf{sk}'_i \to \mathsf{sk}})$

15:     **end for**

16:     $\mathsf{ct}_i' \leftarrow \mathsf{ModPack}((a_{di+j}', b_{di+j}')_{0 \leq j < k})$

17:     Rescale $(\mathsf{ct}_i'; Q_1, Q_0)$

18: **end for**

19: **return** all $\mathsf{ct}_i'$'s

---

# FIG. 9

```
          ┌─────────────┐
          │    START    │
          └──────┬──────┘
                 ▼
   ┌───────────────────────────────────────┐
   │ GENERATE FIRST MATRIX CIPHERTEXT BY USING │  ~910
   │    PLURALITY OF HOMOMORPHIC CIPHERTEXTS    │
   └─────────────────┬─────────────────────┘
                     ▼
   ┌───────────────────────────────────────┐
   │  SPLIT FIRST MATRIX CIPHERTEXT INTO SECOND │  ~920
   │ MATRIX CIPHERTEXT AND THIRD MATRIX CIPHERTEXT │
   └─────────────────┬─────────────────────┘
                     ▼
   ┌───────────────────────────────────────┐
   │ PERFORM OPERATION BETWEEN EACH OF SECOND AND │  ~930
   │ THIRD MATRIX CIPHERTEXTS AND PLAINTEXT MATRIX │
   └─────────────────┬─────────────────────┘
                     ▼
   ┌───────────────────────────────────────┐
   │          OUTPUT OPERATION RESULT          │  ~940
   └─────────────────┬─────────────────────┘
                     ▼
          ┌─────────────┐
          │     END     │
          └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112104446 A1